# FASCICULE DE BREVET EUROPEEN

(11) **EP 3 618 633 B1**
(45) Date de publication et mention de la délivrance du brevet: **26.06.2024**
(21) Numéro de dépôt: 18728689.3
(22) Date de dépôt: 03.05.2018
(51) Int. Cl.: A01N 55/10, A01N 43/653, A01P 3/00

(54) **UTILISATION DU MONOMETHYLSILANETRIOL ET/OU DE SES SELS POUR PROTEGER LES CULTURES**
VERWENDUNG VON MONOMETHYLSILANETRIOL UND/ODER DESSEN SALZEN ZUM SCHUTZ VON PFLANZEN
USE OF MONOMETHYLSILANETRIOL AND/OR THE SALTS OF SAME FOR PROTECTING CROPS

(30) Priorité: 04.05.2017 FR 1753948
(43) Date de publication de la demande: 11.03.2020
(73) Titulaire: Hbco Herbals and Bio Chemicals Outsourcing, 67250 Hunspach (FR); Biophyconseils, 31830 Plaisance du Touch (FR)
(72) Inventeur: ROUMÉGUÈRE, Olivier, 31830 Plaisance Du Touch (FR); RUBAT DU MÉRAC, Henri, 67250 Hunspach (FR)
(74) Mandataire: Plasseraud IP
(86) Numéro de dépôt international: PCT/FR2018/051116
(87) Numéro de publication internationale: WO 2018/203012

(56) Documents cités:
- WO-A1-00/03595
- WO-A1-02/064686
- WO-A1-2007/045256
- WO-A1-2017/198957
- WO-A2-02/083808
- DATABASE CAPLUS [Online] CHEMICAL ABSTRACTS SERVICE, COLUMBUS, OHIO, US; PENNER, DONALD: "Novel adjuvants for targeting pesticide delivery", XP002773979, extrait de STN Database accession no. 2007:647855
- Eric A Nelson ET AL: "Enhancing Herbicide Selectivity with Water-Repellent Adjuvants", Weed Technology, 1 juillet 2006 (2006-07-01), pages 677-681, XP055084985, DOI: 10.1614/WT-05-101R1.1 Extrait de l'Internet: URL:http://www.jstor.org/discover/10.2307/ 4495737?uid=3738736&uid=377579203&uid=2129 &uid=2&uid=70&uid=3&uid=60&sid=21102804038 917 [extrait le 2013-10-23] & PENNER, DONALD: "Novel adjuvants for targeting pesticide delivery", JOURNAL OF ASTM INTERNATIONAL , 4(3), NO PP. GIVEN CODEN: JAIOAD URL: HTTP://JOURNALSIP.ASTM.ORG/JOURNALS/DOWNLO AD/JAI100754.5336-1.PDF, 2007, DOI: 10.1520/JAI100754 10.1520/JAI100754
- DATABASE CAPLUS [Online] CHEMICAL ABSTRACTS SERVICE, COLUMBUS, OHIO, US; WANG, ZHONGCHEN ET AL: "Process for manufacture of layered sustained-release multielement", XP002773978, extrait de STN Database accession no. 2013:1912893 -& CN 103 435 425 A (PEOP. REP. CHINA) 11 décembre 2013 (2013-12-11)
- DATABASE CAPLUS [Online] CHEMICAL ABSTRACTS SERVICE, COLUMBUS, OHIO, US; KOVAL, E. Z. ET AL: "Complex evaluation of the resistance of heteroorganic protective coatings to fungi", XP002773980, extrait de STN Database accession no. 1982:182793 & KOVAL, E. Z. ET AL: "Complex evaluation of the resistance of heteroorganic protective coatings to fungi", MIKROBIOLOGICHESKII ZHURNAL (1978-1993) , 44(1), 88-92 CODEN: MZHUDX; ISSN: 0201-8462, 1982,
- DATABASE CAPLUS [Online] CHEMICAL ABSTRACTS SERVICE, COLUMBUS, OHIO, US; PASHCHENKO, A. A. ET AL: "Study of the resistance of organosilicon protective coatings to molds", XP002773981, extrait de STN Database accession no. 1978:592306 & PASHCHENKO, A. A. ET AL: "Study of the resistance of organosilicon protective coatings to molds", BIOL. AKT. SOEDIN. ELEM. IV B GRUPPY , 195-203 PUBLISHER: AKAD. NAUK SSSR, SIB. OTD., IRKUTSK. INST. ORG. KHIM., IRKUTSK, USSR. CODEN: 38OBA2, 1977,

## Description

La présente invention a pour objet une utilisation du monométhylsilanetriol et/ou de ses sels, seul(s) ou éventuellement en association avec un pesticide et/ou un produit de traitement des cultures, pour protéger les cultures, favoriser leur croissance et leur rendement.

Le silicium est le deuxième élément le plus abondant dispersé sur l'écorce de la terre après l'oxygène, représentant 28% de la croûte terrestre. Les êtres vivants assimilent le silicium généralement sous forme de silice organique ou d'acide monosilicique (ou acide silicique, Si(OH)₄) mais dans les sols en culture il se trouve principalement sous forme minérale (polymérique).

Il se trouve présent dans les tissus de la plante sous quatre formes : minérale, organique, polymérique et cristalline. Cette dernière forme se trouve sur la superficie des feuilles, ce qui leur apporte plus de brillance et de résistance. Le silicium est principalement absorbé par les plantes par voie racinaire, sous forme d'acide silicique.

Certaines plantes sont très sensibles à la présence de silicium pour leur bon développement végétatif. A titre d'exemples on pourra citer les *Solanaceae* (pommes de terre, tomates, piments, aubergines, poivrons, etc), les *Astereaceae* (laitues, scaroles, artichauts, salsifis, topinambours, tournesols, etc), les *Poaceae* (blé, orge, avoine, seigle, millets, les graminées, etc.) et aussi la famille des *Brassicaceae* (choux, navets, cressons, moutarde, colza, radis, etc).

De nombreuses publications traitent des bienfaits du silicium sur les plantes. Outre le bon développement, le silicium renforce la plante pour mieux se protéger de nombreux parasites et bioagresseurs.

Le document « Agron. Sustain. Dev. (2012) 32:201-213, Benefits of plant silicon for crops, a review, Guntzer et al. » est un article assez général sur les dernières avancées concernant les mécanismes d'accumulation du silicium dans les plantes et son comportement dans le sol. Il est indiqué que les bénéfices du silicium sont clairement démontrés lorsque les plantes sont exposées à des stress abiotiques (sécheresse, salinité, déficience nutritionnelle) et biotiques, et que le silicium a un impact positif sur le développement des plantes. Le silicium améliore l'assimilation des éléments nutritifs de la plante. En effet, le silicium joue un rôle de régulateur en favorisant l'absorption du phosphore par les racines lorsque la plante en manque, et à l'inverse, limite l'apparition de chlorose chez la plante due à un excès de phosphore en favorisant la diminution de l'absorption dudit phosphore. L'absorption du potassium, de l'azote et du calcium est également améliorée même lors d'un apport faible de silicium, ce qui favorise une meilleure croissance des cultures.

Dans le document « Environ. and Experim. Botany 65 (2009) 155-161, Absorption of aqueous inorganic and organic silicon compounds by wheat and their effect on growth and powdery mildew control, Côté-Beaulieu et al.», l'acide silicique (Si(OH)₄) est comparé aux méthyl-silanols, à savoir les acides monométhyl-siliciques (Si(CH₃)(OH)₃) (monométhylsilanetriol), diméthyl-siliciques (Si(CH₃)₂(OH)₂) et triméthyl-siliciques (Si(CH₃)₃(OH)). En effet, de par la faible solubilité du silicium, il y a une limite dans l'augmentation de la mise à disposition du silicium pour les plantes. Pour cette raison, les méthyl silanols ont été évalués pour leur capacité à protéger le blé, cultivé dans des conditions hydroponiques et à base de tourbe, contre l'oïdium. Il est montré dans ce document que l'acide monométhyl-silicique (encore dénommé le monométhylsilanetriol) et l'acide triméthyl-silicique n'offrent aucune protection contre l'oïdium, et au contraire, provoquent des niveaux d'infection supérieurs à ceux du contrôle et des symptômes de phytotoxicité. En conclusion, il est suggéré dans ce document que, malgré leur solubilité plus élevée, les silanols ne peuvent être utilisés comme des substituts de l'acide silicique pour protéger les plantes contre des maladies. L'acide silicique demeure donc le seul composé capable de protéger les plantes.

Le monométhylsilanetriol et/ou ses sels ont également été décrits dans la littérature pour leur propriétés hydrophobes ou imperméabilisantes.

Ainsi, le document WO 00/03595 décrit notamment une composition comprenant un herbicide et une solution aqueuse de méthylsiliconate de sodium, la solution aqueuse de méthylsiliconate de sodium formant une émulsion avec l'herbicide. Lorsque la composition est appliquée par pulvérisation sur le feuillage des plantes, l'émulsion forme des particules sphériques qui vont rebondir du feuillage des plantes vers le sol où l'herbicide va ainsi pouvoir exercer son action.

Les documents de Donald Penner « Novel adjuvants for targeting pesticide delivery » dans Journal of ASTM International (2007), 4(3) et « Enhancing Herbicide Selectivity with Water-Repellent Adjuvants » avec E. A. Nelson dans Weed Technology, volume 20(3), pp. 677-681 décrivent l'utilisation d'adjuvants organo-silicone hydrofuges (parmi lesquels le méthylsiliconate de sodium) en association avec des herbicides ou des insecticides. Dans ces documents les adjuvants sont testés pour leur capacité à augmenter la tension de surface de solutions appliquées par spray sur le feuillage des plantes. Ainsi, en augmentant la tension de surface, les gouttelettes comprenant les herbicides/insecticides avec ces adjuvants hydrofuges rebondissent des feuilles jusqu'au sol.

Les documents CN 102 584 471 et CN 103 435 425 décrivent l'utilisation de méthylsiliconate de sodium en revêtement imperméable dans la production de supports de cultures ou d'engrais granulés, ledit méthylsiliconate de sodium étant intégré ou appliqué au sol. Le document WO 00/03595 décrit la réduction de la rétention d'herbicides, entraînant une baisse de leur phytotoxicité et une augmentation de la croissance des plantes traitées par utilisation de méthylsiliconate de sodium.

Les documents WO 2007/045256 et WO 2002/083808 décrivent l'utilisation de méthylsiliconates en traitement du sol pour limiter l'évaporation de l'eau. L'application d'une quantité suffisante de méthylsiliconates sur le sol permet ainsi de créer une couche hydrophobe imperméabilisante.

Le document WO 2002/064686 décrit des compositions comprenant un agent hydrophobe (tel qu'un sodium ou potassium méthyl siliconate) et un agent biocide, pour imprégner des substrats solides (tels que des matériaux de construction, du bois, du textile etc). L'agent hydrophobe permet d'imperméabiliser le substrat et l'agent biocide de le protéger.

Dans l'ensemble de ces documents le méthylsiliconate de sodium est donc utilisé pour ses propriétés imperméabilisantes.

Les publications russes de Koval, E. Z. et al. dans Mikrobiologicheskii Zhurnal (1978-1993) (1982), 44(1), 88-92, et de Pashchenko, A. A. et al. dans Biol. Akt. Soedin. Elem. IV B Gruppy (1977), 195-203 concernent des études évaluant la résistance de revêtements protecteurs à base d'organosilicone à des champignons ou moisissures.

Le document WO 2017/198957, qui appartient à l'état de la technique selon l'article 54(3) de la Convention sur le Brevet Européen (CBE), décrit l'utilisation de silicium comme stimulant de l'absorption du fer chez une plante. Les quantités de silicium préconisées en apport de la plante sont cependant assez conséquentes, à savoir de 2 à 1000 kg par hectare, ce qui d'un point de vue économique n'est pas avantageux.

Il a maintenant été découvert de manière surprenante par les Inventeurs que le monométhylsilanetriol et/ou ses sels avai(en)t une action propre sur la plante, en agissant sur le métabolisme de la plante, et ceci même lorsque le monométhylsilanetriol et/ou ses sels est (sont) utilisé(s) dans de très faibles quantités, à savoir de l'ordre de 10⁻⁵ à 1 L par hectare de culture lorsque le monométhylsilanetriol et/ou ses sels se trouve(nt) sous forme liquide.

Les Inventeurs ont plus particulièrement découvert que l'utilisation du monométhylsilanetriol et/ou de de ses sels permettait d'avoir des résultats surprenants et très encourageants sur les cultures, notamment en termes de rendement et d'amélioration de la qualité sanitaire des cultures.

Ils ont également découvert que le silicium élément était mieux absorbé par la plante lorsqu'il était administré sur les feuilles de la plante et sous forme de monométhylsilanetriol et/ou de ses sels.

Les Inventeurs ont encore découvert que lorsque le monométhylsilanetriol et/ou ses sels étai(en)t utilisé(s) en association avec un pesticide et/ou un produit de traitement des cultures, alors il était possible de diminuer sensiblement la quantité de pesticide et/ou de produit de traitement des cultures préconisée pour une action efficace.

La présente invention a pour premier objet l'utilisation d'un composé répondant à la formule (I) suivante :

Si(CH₃)(OH)₃₋ₙ(OX)ₙ (I)

dans laquelle X est un atome d'hydrogène ou un métal alcalin, notamment choisi parmi le lithium, le sodium ou le potassium et n est un entier allant de 1 à 3,
pour une application foliaire sur les cultures choisies dans le groupe comprenant :
   - les grandes cultures, notamment celles choisies parmi les céréales, les oléagineux, les protéagineux, les légumineuses fourragères, les graminées fourragères, les cultures sucrières,
   - les cultures légumières ou maraîchères, notamment les légumes frais,
   - les cultures fruitières, notamment celles choisies parmi les fruits à noyaux, les fruits à pépins, les fruits à amandes, les fruits en grappe, les petits fruits ou les fruits des régions chaudes,
   - les plantes aromatiques et médicinales,
   - les cultures florales et ornementales,
et leurs mélanges,
et pour son action propre sur le métabolisme des cultures, à savoir pour :
   - améliorer la croissance et le développement des cultures,
   - améliorer le rendement des cultures,
   - stimuler et renforcer les cultures face aux stress biotiques, notamment en améliorant leur résistance face aux agents phytopathogènes et/ou ravageurs, et/ou
   - améliorer la qualité sanitaire des cultures, à savoir notamment baisser le taux de mycotoxines et limiter la dilution des protéines,
ledit composé (I) étant sous forme liquide et étant utilisé en une quantité allant de 10⁻⁵ L à 1 L par hectare de culture, de préférence de 2×10⁻⁵ L à 0,2 L par hectare de culture, et plus préférentiellement de 4×10⁻⁵ L à 4×10⁻³ L par hectare de culture.

On entend par « application foliaire » sur les cultures, une application sur les feuilles des cultures.

Selon l'invention, l'application foliaire du composé (I) tel que défini ci-dessus peut être effectuée au moment de l'apparition des premières feuilles et/ou à tout autre moment jusqu'à la récolte des cultures.

Selon un mode de réalisation de l'invention, dans le composé de formule (I) ci-dessus, X représente un atome d'hydrogène, et n représente indifféremment un entier égal à 1, 2 ou 3. Le composé (I) représente ainsi le monométhylsilanetriol (MMST), encore dénommé acide monométhylsilicique et répond à la formule Si(CH₃)(OH)₃.

Selon un autre mode de réalisation de l'invention, dans le composé de formule (I) ci-dessus, X représente un métal alcalin, notamment choisi parmi le lithium, le sodium ou le potassium, et n représente un entier égal à 1, 2 ou 3. Le composé (I) représente ainsi un sel de monométhylsilanetriol.

Selon un mode de réalisation particulier de l'invention, X représente un atome de potassium et n est un entier égal à 1. Dans ce cas, le composé de formule (I) est le méthylsiliconate de potassium encore dénommé sel de potassium de méthylsilanetriol ou potassium méthylsilanetriolate et répond à la formule Si(CH₃)(OH)₂(O⁻K⁺).

Selon un autre mode de réalisation avantageux de l'invention, le composé de formule (I) est utilisé sous la forme d'un complexe stabilisé avec un acide organique ou inorganique, ou un de leurs dérivés.

A titre d'exemple d'acide organique, on pourra citer les acides carboxyliques, notamment les monoacides aliphatiques tels que l'acide acétique, l'acide citrique, l'acide formique, l'acide gluconique, l'acide lactique, l'acide oxalique, l'acide caprique, l'acide tartrique, l'acide salicylique ou leurs dérivés ; les acides carboxyliques halogénés ; les monoacides aromatiques ; les acides thiols ; les acides nucléiques tels que l'acide ribonucléique ou l'acide désoxyribonucléique.

A titre d'exemple d'acide inorganique, on pourra citer les oxacides, notamment l'acide hypochloreux, l'acide chloreux, l'acide chlorique, l'acide perchlorique, l'acide hypoiodeux, l'acide iodique, l'acide périodique, l'acide sulfureux, l'acide sulfurique, l'acide nitreux, l'acide nitrique, l'acide hypophosphoreux, l'acide phosphoreux, l'acide phosphorique, l'acide phosphonique, l'acide borique, l'acide manganique, l'acide permanganique.

Dans la présente demande, le composé de formule (I) peut indifféremment désigner :
- le monométhylsilanetriol seul ou en association avec un ou plusieurs de ses sels,
- un ou plusieurs sels de monométhylsilanetriol,
- un complexe de l'acide monométhylsilicique ou un complexe d'un sel de l'acide monométhylsilicique, stabilisé avec un acide organique ou inorganique, ou un de leurs dérivés.

Concernant les grandes cultures ci-dessus citées, on pourra plus particulièrement citer, à titre d'exemples de céréales, le blé tendre, le blé dur, le maïs, le riz, les orges fourragères et brassicoles, le sorgho, le millet, l'avoine, le seigle, le triticale, et plus particulièrement le blé.

A titre d'exemples d'oléagineux, on pourra plus particulièrement citer le tournesol, le colza, l'arachide, le cacaoyer, le cotonnier, l'olivier, le ricin, le soja, le palmier à huile, le lin, et plus particulièrement le tournesol.

A titre d'exemples de protéagineux, on pourra plus particulièrement citer les pois protéagineux, les féveroles, les haricots, les pois chiches, les pois cassés, les lentilles, les lupins, les luzernes.

A titre d'exemples de légumineuses fourragères, on pourra plus particulièrement citer la luzerne, les trèfles.

A titre d'exemple de graminées fourragères, on pourra citer le raygrass.

A titre d'exemples de cultures sucrières, on pourra citer la betterave, la canne à sucre.

Concernant les cultures légumières ou maraîchères, on pourra citer à titre d'exemples de légumes frais :
- les légumes-feuilles, notamment les salades (par exemple endive, laitue, mâche, romaine, scarole, roquette), le céleri, le chou, l'épinard, le fenouil, l'oseille, la poirée, la rhubarbe, les légumes tropicaux,
- les légumes-tiges, notamment l'asperge, les pousses de bambous, le poireau, le chou-rave,
- les bulbes, notamment l'ail, l'échalote, l'oignon,
- les légumes-fleurs, notamment le chou-fleur, le brocoli, les câpres, l'artichaut,
- les légumes-racines, notamment la betterave, la carotte, le panais, le navet, le radis, les salsifis,
- les légumes-fruits, notamment l'aubergine, l'avocat, la chayotte, le concombre, le cornichon, la courge, la courgette, le gombo, le melon, l'olive, la pastèque, le poivron, le piment, la tomate, le petit pois, l'haricot vert,
- les fines herbes, notamment le cerfeuil, la ciboulette, l'estragon, le laurier, le persil, le basilic,
- les tubercules, notamment le crosne du Japon, l'igname, l'oca du Pérou, la patate douce, la pomme de terre, le topinambour.

Concernant les cultures fruitières, pour les cultures :
- de fruits à noyaux, on pourra citer les cultures d'abricotier, de cerisier, de pêcher, de prunier ou de manguier,
- de fruits à pépins, on pourra citer les cultures de pommier, de poirier, de cognassier, de grenadier,
- de fruits à amandes, on pourra citer les cultures d'amandier, de noisetier, de noyer,
- de fruits en grappe, on pourra citer la viticulture,
- de petits fruits, on pourra citer les cultures de cassis, de framboisier, de groseillier,
- de fruits des régions chaudes, on pourra citer la banane, la figue, le kaki, le kiwi.

Concernant les cultures florales et ornementales on pourra citer la rose, la tulipe, l'oeillet et le chrysanthème.

Des exemples de ravageurs causant des maladies dans les cultures, à l'égard desquels la résistance peut être améliorée grâce à l'utilisation du composé de formule (I) sont décrits ci-dessous.

On pourra ainsi citer les lépidoptères comme *Ostrinia nubilalis, Sesamia nonagrioides* ; les hémiptères comme *Rhopalosiphum padi, Sitobion avenae, Schizaphis graminum, Metopolophium dirhodum* ; les cicadellidaes comme *Metcalfa pruimosa, Cicadella viridis, Psammotettix alienus;* les coléoptères comme *Ceutorrhynchus napi, Ceuthorhynchus picitarsis, Psylliodes chrysocephalus.*

Des exemples d'agents phytopathogènes causant des maladies dans les cultures, à l'égard desquels la résistance peut être améliorée grâce à l'utilisation du composé de formule (I) sont décrits ci-dessous.

On pourra ainsi citer les oomycètes comme *Pythium spp.* et *Phytophtora spp.* ; les spongospora comme la gale poudreuse de la pomme de terre ; les bactéries comme *Erwinia, Agrobacterium, Xanthomonas spp., Pseudomonas spp. ;* les pathogènes fongiques ascomycètes comme *Fusarium spp., Thielaviopsis spp., Verticillium spp., Magnaporthe grisea, Sclerotinia sclerotiorum, Septoria tritici, Erysiphe spp.* ; les coelomycètes comme *Phoma spp.* ; les basidiomycètes comme *Ustilago spp., Rhizoctonia spp., Phakospora pachyrhizi, Puccinia spp..*

A titre d'exemples plus particuliers d'agents phytopathogènes causant des maladies dans les cultures, à l'égard desquels la résistance peut être améliorée grâce à l'utilisation du composé de formule (I), on pourra citer les pathogènes fongiques.

Comme exemples de pathogènes fongiques responsables des maladies des céréales, on pourra citer *Alternaria spp., Blumeria graminis, Erysiphe graminis, Pythium aphanidermatum, Septoria nodorum, Phaeosphaeria nodorum, Mycosphaerella graminicola, Oculimacula yallundae, Microdochium spp., Fusarium spp..*

Plus particulièrement selon l'invention, à titre d'exemples de pathogènes fongiques à l'égard desquels la résistance peut être améliorée grâce à l'utilisation du composé de formule (I), on pourra citer ceux du genre *Fusarium* ou *Microdochium,* notamment rencontrés sur les céréales.

Les pathogènes du genre *Fusarium,* à savoir notamment *F*. *graminearum, F. culmorum, F. tricinctum, F. poae, F. avenaceum, F. langsethiae* et *F*. *sporotrichioides,* sont responsables de la production de mycotoxines telles DON et NIV. Plus particulièrement, le phytopathogène *Fusarium graminearum* occasionne des pertes de rendement modérées.

Les pathogènes du genre *Microdochium,* à savoir notamment *M. majus* et *M. nivale,* ne créent pas de mycotoxines mais sont responsables de pertes de rendement importantes en fin de cycle.

Les mycotoxines sont des toxines élaborées par diverses espèces de champignons microscopiques *(Fusarium* sp., *Aspergillus* sp., *Penicillium* sp etc.) colonisant des plantes et qui se révèlent être toxiques pour un certain nombre d'autres champignons microscopiques, de plantes, d'animaux ou pour l'homme. La diversité des mycotoxines produites par les champignons est assez grande et il importe de se limiter aux molécules les plus préoccupantes pour la santé. Sur plus de 400 mycotoxines recensées, seule une vingtaine mérite attention. Une même espèce peut produire plusieurs mycotoxines (par exemple un *Fusarium* peut produire du désoxynivalénol (DON) et du nivalénol (NIV)) et une même mycotoxine peut être produite par différentes espèces ou genres (par exemple l'ochratoxine peut provenir de *Penicillium* comme *d'Aspergillus).*

Plus particulièrement, les mycotoxines produites par les espèces du genre *Fusarium* appartiennent à trois familles distinctes : les trichothécènes, la zéaralénone et les fumonisines. La législation définit une teneur maximale pour chaque mycotoxines : celles produites au champ avec le déoxynivalenol (DON) qui est de la famille des trichothécènes, la zéaralénone (ZEA), et celles qui sont secrétées pendant le stockage, telles que l'ochratoxine A (OTA).

Le désoxynivalénol (DON) contamine diverses céréales, en particulier le blé et le maïs. La présence de DON dans les grains de blé provoque notamment la fusariose de l'épi. La présence de DON dans les aliments provoque chez le bétail des syndromes émétiques et le refus de nourriture. La maîtrise de la qualité sanitaire des cultures, notamment du blé et du maïs, est donc essentielle pour accéder au marché.

Dans l'Union européenne, les valeurs maximales concernant les mycotoxines les plus courantes - dont le DON - dans les produits agricoles et alimentaires sont fixées par le Règlement 1881/2006.

Le tableau ci-dessous est donné à titre indicatif.

| **Mycotoxine du genre *Fusarium*** | **Céréales concernées** | **Teneur Maximale (µg/kg)** |
|---|---|---|
| Déoxynivalénol (DON) | Céréales brutes autres que blé dur, avoine, maïs | 1250 |
| | Blé dur, avoine, maïs | 1750 |
| Zéaralénone | Céréales brutes sauf maïs | 100 |
| Fumonisine | Maïs brut | 300 |

Plus particulièrement selon l'invention, à titre d'exemples de mycotoxines dont le taux peut être abaissé dans les cultures grâce à l'utilisation du composé de formule (I), on pourra citer celles choisies dans le groupe comprenant les trichothécènes, la zéaralénone, les fumonisines et leurs mélanges.

A titre d'exemples de trichothécènes, on pourra citer déoxynivalénol (DON), nivalénol (NIV) et diacétoxyscirpénol (DAS).

Selon un mode de réalisation avantageux de l'invention, le composé (I) se présente sous la forme d'un liquide ou d'un gel, et de préférence d'un liquide.

Lorsque le composé (I) se trouve sous forme d'un liquide, il pourra avantageusement être utilisé en une quantité allant de 10⁻⁵ L à 1 L par hectare de culture, de préférence de 2×10⁻⁵ L à 0,2 L par hectare de culture, et plus préférentiellement de 4×10⁻⁵ L à 4×10⁻³ L par hectare de culture, ou, si la quantité du composé (I) est exprimée en concentration, le composé (I) pourra avantageusement être utilisé à une concentration allant de 2×10⁻⁶ % à 1 %, de préférence de 2×10⁻⁵ % à 0,5 %, et plus préférentiellement de 4×10⁻⁵ % à 4×10⁻³ % par hectare de culture.

L'invention a également pour objet l'utilisation, telle que définie ci-dessus, du composé de formule (I), en association avec :
- un pesticide choisi dans le groupe comprenant les fongicides, les herbicides, les insecticides et leurs mélanges, et/ou,
- un produit de traitement des cultures choisi dans le groupe comprenant les fertilisants, notamment les engrais, les biostimulants, les biocontrôles, les stimulateurs de défense naturelle (SDN) et leurs mélanges.

L'association du composé de formule (I) avec un pesticide ou un produit de traitement des cultures est particulièrement avantageuse car elle permet de diminuer sensiblement les quantités de pesticide ou de produit de traitement des cultures préconisées pour une action efficace.

Trouver de nouveaux moyens de réduire les doses de pesticides et autres produits de traitement en les associant à d'autres produits répond à la stratégie thématique de l'Union Européenne de 2006, sur l'utilisation durable des pesticides. Cette stratégie a pour ambition de mettre en place un ensemble de mesures pour réduire les risques pour l'environnement et la santé humaine de l'utilisation des pesticides. L'enjeu est aussi de permettre une réduction globale de l'usage des produits phytosanitaires sans perte de rendements pour les professionnels. Parmi les objectifs figurent la réduction des niveaux de substance actives nocives et l'encouragement de la conversion à une agriculture utilisant des quantités limitées ou nulles de pesticides. L'ensemble de la profession est actuellement mobilisée pour travailler la réduction d'usage des produits phytosanitaires, en travaillant sur plusieurs axes, dont notamment le développement de solutions plus économes en intrants, en particulier la stratégie d'associer les stimulateurs de défense des plantes (SDP) ou produits nutritionnels ou biostimulants aux fongicides classiques en diminuant de 50% la dose du partenaire fongicide préconisée.

Un pesticide est un produit destiné à lutter contre les parasites animaux et végétaux et les adventices indésirables des cultures.

Les fongicides sont des substances destinées à éliminer les champignons. Plusieurs modes d'action différents peuvent être distingués dans les fongicides, à savoir :
- ceux qui affectent les processus respiratoires et la production d'énergie, dont ceux qui ciblent l'inhibition de la germination des spores comme les multisites et ceux qui ciblent l'inhibition du complexe mitochondrial II ou III comme les strobilurines ou les SDHI,
- ceux qui affectent la perméabilité membranaire en perturbant la synthèse des lipides,
- ceux qui affectent la biosynthèse des acides aminés ou des protéines,
- ceux qui affectent la biosynthèse des acides nucléiques et/ou la division cellulaire et les microtubules et/ou la signalisation cellulaire,
- les stimulateurs des réactions de défense des plantes,
- ceux qui présentent d'autres modes d'actions non connus à ce jour.

A titre d'exemples de fongicides, on pourra notamment citer les triazolinthiones (comme par exemple le prothioconazole), les triazoles (comme par exemple le tébuconazole), la famille des inhibiteurs de la succinate déshydrogénase (SDHI), les strobilurines, les spirocétalamines, les dithiocarbamates (comme le manèbe, le mancozèbe, le méthirame de zinc), les phtalimides (comme le folpel, le captane), les guanidines (comme la doguadine, le triacétate de guazatine) et/ou les quinones (Dithianon).

A titre d'exemple plus particulier de fongicide on citera le Prosaro^{®} qui comprend deux substances actives des familles chimiques triazolinthione et triazole, à savoir respectivement le prothioconazole et le tébuconazole. Le Prosaro^{®} est habituellement utilisé contre les maladies des céréales, des crucifères oléagineuses, des pois protéagineux et des féveroles.

Les herbicides sont destinés à limiter l'installation d'espèces végétales adventices. Les familles d'herbicides les plus importantes sont les acides amino-phosphoriques (comme les glyphosates), les urées (comme le diuron, l'isoproturon), les triazines (comme l'atrazine, la simazine). En France plus de 300 spécialités comprenant du glyphosate sont commercialisées.

Les insecticides sont destinés à tuer les insectes ou à empêcher le déroulement normal de leur cycle de vie.

Les familles les plus rencontrées d'insecticides sont les neurotoxiques comme les pyréthrinoïdes (ex: la deltaméthrine) et les organophosphorés (comme chlorpyriphos méthyl) ; ensuite les régulateurs de croissance comme le fenoxycarbe et enfin les biopesticides comme les toxines de bacillus thurengiensis ou les médiateurs chimiques.

Les fertilisants sont des substances, ou mélanges de substances, naturelles ou d'origine synthétique, utilisées en agriculture pour améliorer les sols et fertiliser les plantes cultivées. Ils comprennent les engrais, les amendements et les mélanges de produits.

Les engrais sont des substances organiques ou minérales destinés à apporter aux plantes des compléments d'éléments nutritifs. Ils peuvent être de types organiques, minéraux et organo-minéraux. A titre d'exemples on pourra citer des boues d'épuration des eaux, des déchets végétaux (résidus verts), des sous-produits de l'élevage, des sources d'engrais azote (N), phosphore (P) et potassium (K) d'origine naturelle ou chimique, des sources d'éléments secondaires comme le calcium, le magnésium ou le soufre, des oligo-éléments comme le bore, le fer, le manganèse, le zinc, le cuivre, le molybdène, le cobalt, des sources d'autres éléments comme le silicium, et des substances ou préparations d'origine végétale ou marine comme les substances humiques ou les extraits de plantes ou d'algues.

On entend par biostimulant, « Un matériel qui contient une (des) substance(s) et/ou micro-organisme(s) dont la fonction, quand appliqués aux plantes ou à la rhizosphère, est de stimuler les processus naturels pour améliorer l'absorption des nutriments, l'efficience des nutriments, la tolérance aux stress abiotiques, et la qualité des cultures, indépendamment du contenu en nutriments du biostimulant » (European Biostimulants Industry Ciuncil, EBIC, 2014).

A titre d'exemples de biostimulants issus du vivant, on pourra citer les extraits purifiés d'algues ; les extraits complexes de plantes ; les extraits purifiés de plantes se composant notamment de protéines, de polysaccharides, de lipides et de polyphénols parmi lesquels on pourra citer les anthocyanes, les flavonoïdes et les stilbènes comme le resvératrol ; les extraits purifiés de macroorganismes ; les microorganismes vivants ; les extraits purifiés de microorganismes ; les extraits complexes d'algues.

D'autres biostimulants peuvent être cités comme les substances de synthèse non xénobiotiques, les substances de synthèse xénobiotiques, les substances minérales ou extraites de minéraux.

Les biocontrôles sont des produits qui peuvent être utilisés comme alternatives aux produits chimiques de synthèse. La famille des biocontrôles comprend quatre types d'agents de biocontôle, à savoir :
- les macro-organismes auxiliaires (IBCA en anglais) (ou l'agresseur agressé), qui sont des invertébrés, insectes, acariens ou nématodes utilisée de façon raisonnée pour protéger les cultures contre les attaques des bioagresseurs ; on pourra plus particulièrement citer les insectes prédateurs (exemple = Orius spp), les insectes parasites (exemple = Trichogramma), les nématodes (exemple = Heterorhabditis bacteriophora) ;
- les micro-organismes (MBCA en anglais) (ou l'agresseur maîtrisé), qui sont des champignons (ex. = Beauvaria spp), bactéries (ex. = Baccillus thuringiensis) et virus (ex. = virus de la Granulose) utilisés pour protéger les cultures contre les ravageurs et les maladies ou stimuler la vitalité des plantes ;
- les produits naturels, qui sont composés de substances présentes dans le milieu naturel et peuvent être d'origine végétale, animale ou minérale ;
- les médiateurs chimiques, qui comprennent les phéromones d'insectes et les kairomones ; ils permettent le suivi des vols des insectes ravageurs et le contrôle des populations d'insectes par la méthode de confusion sexuelle et le piégage.

L'ensemble de ces produits de biocontrôles revendiquent une activité directe ou indirecte sur des pathogènes. C'est pourquoi ils sont rattachés à la famille des produits phytosanitaires.

La catégorie des stimulateurs de défense des plantes, appelés SDP ou SDN (stimulateurs de défenses naturelles) regroupe : « Toute substance ou micro-organisme vivant non pathogène capables d'induire (ou de préparer à l'induction) des réponses de défense chez une plante qui conduisent à une meilleure résistance de la plante face à des stress biotiques. » (Systèmes de culture innovants RMT Elicitra, 2013).

Parmi les SDN on distingue un éliciteur, qui permet à la plante de déclencher directement ses mécanismes de défense, et un potentialisateur qui déclenche les défenses en deux temps : l'application du produit met la plante dans un "état d'alerte", et c'est ensuite l'attaque par le pathogène qui déclenche les mécanismes de défense.

A titre d'exemple de SDN, on pourra citer ceux d'origine naturelle dont des extraits purifiés d'algues ou de plantes, comme les oligogalacturonides dérivés de la pectine des parois des cellules végétales, des extraits complexes d'algues ou de plantes, les extraits riches en phytohormones, parmi lesquels on pourra citer l'acide jasmonique, l'acide salycilique, le triacontanol, le fructose, le saccharose, le glucose, le geniposide, des extraits purifiés de macroorganismes, des microorganismes vivants, des extraits purifiés de microorganismes, comme les β-glucanes et la chitine issus de la paroi des champignons, et aussi des substances de synthèse comme l'acibenzolar-S-Méthyl ou les phosphonates.

L'invention a encore pour objet l'utilisation du composé de formule (I), telle que définie ci-dessus, pour une administration simultanée, séparée ou séquentielle avec le pesticide et/ou le produit de traitement des cultures tel(s) que défini(s) ci-dessus.

Selon un mode de réalisation de l'invention, lorsque le pesticide et/ou le produit de traitement des cultures est(sont) utilisé(s) en association avec le composé de formule (I), alors la quantité dudit pesticide et/ou produit traitement de culture est de 10% à 60%, et de préférence de 15% à 35% de la dose homologuée préconisée pour une action efficace.

En d'autres termes, cela signifie que lorsque le pesticide et/ou le produit de traitement des cultures est(sont) associé(s) avec le composé de formule (I), alors leur(s) quantité(s) préconisée(s) pour une action efficace peut être diminuée de 40% à 90% pour une action au moins aussi efficace, voir supérieure, que si le pesticide et/ou le produit de traitement des cultures avai(en)t été utilisé(s) à la dose homologuée préconisée.

L'invention concerne donc également l'utilisation du composé de formule (I) afin de diminuer de 40% à 90% les quantités homologuées de pesticide et/ou de produits de traitement de culture préconisées pour une action efficace.

Il est également décrit une composition liquide de traitement foliaire des plantes caractérisée en ce qu'elle est constituée :
- d'un composé répondant à la formule (I) suivante :

   Si(CH₃)(OH)₃₋ₙ(OX)ₙ (I)

   dans laquelle X est un atome d'hydrogène ou un métal alcalin, notamment choisi parmi le lithium, le sodium ou le potassium et n est un entier allant de 1 à 3,
- d'un produit de traitement des cultures choisi dans le groupe comprenant les fertilisants, notamment les engrais, les biostimulants, les stimulateurs de défense naturelle (SDN) et leurs mélanges,
- d'un agent de formulation et/ou d'un agent adjuvant choisi dans le groupe comprenant l'eau, les agents conservateurs, les agents émulsifiants, les agents tensioactifs, les agents dispersants, les agents antigels, les agents anti-mousse, les agents humectants, les agents pénétrants, les agents mouillants et étalants, les agents alourdisseurs de goutte, les agents anti-dérives, les agents collants et rétenteurs, et leurs mélanges.

Selon un mode de réalisation de l'invention, la composition liquide telle que définie ci-dessus comprend un composé de formule (I) en une quantité allant de 0,001% à 50% en poids par rapport au poids total de la composition, de préférence de 0,02% à 50%, et plus préférentiellement de 0,02% à 2% en poids par rapport au poids total de la composition.

L'invention a encore pour objet une composition phytosanitaire liquide pour une application foliaire sur les cultures caractérisée en ce qu'elle est constituée :
- d'un composé répondant à la formule (I) suivante:

   Si(CH₃)(OH)₃₋ₙ(OX)ₙ (I)

   dans laquelle X est un atome d'hydrogène ou un métal alcalin, notamment choisi parmi le lithium, le sodium ou le potassium et n est un entier allant de 1 à 3,
   ledit composé (I) étant présent en une quantité allant de 0,00004% à 0,004% en poids par rapport au poids total de la composition,
- d'un pesticide choisi dans le groupe comprenant les fongicides, les herbicides, les insecticides et leurs mélanges et/ou d'un produit de traitement des cultures choisi dans le groupe comprenant les fertilisants, notamment les engrais, les biostimulants, les biocontrôles, les stimulateurs de défense naturelle (SDN) et leurs mélanges,
- d'eau,
- et éventuellement d'un agent de formulation et/ou d'un agent adjuvant choisi dans le groupe comprenant les agents conservateurs, les agents émulsifiants, les agents tensioactifs, les agents dispersants, les agents antigels, les agents anti-mousse, les agents humectants, les agents pénétrants, les agents mouillants et étalants, les agents alourdisseurs de goutte, les agents anti-dérives, les agents collants et rétenteurs, et leurs mélanges.

De façon avantageuse selon l'invention, une composition telle que définie ci-dessus est une composition diluée, qui peut directement être appliquée sur les cultures.

Cette composition diluée peut être préparée directement dans un pulvérisateur agricole ou peut être transférée dans un pulvérisateur agricole une fois préparée, pour être appliquée sur les cultures.

Le composé de formule (I), le pesticide et le produit de traitement des cultures sont tels que définis ci-dessus.

A titre d'exemples d'agents de formulation on pourra notamment citer les agents conservateurs, les agents émulsifiants, les agents tensioactifs, les agents dispersants, les agents antigels, les agents anti-mousses.

A titre d'exemples d'adjuvants on pourra notamment citer les agents humectants, les agents pénétrants, les agents mouillants et étalants, les agents alourdisseurs de goutte, les agents anti-dérives, les agents collants et rétenteurs.

Les agents humectants présentent une activité alourdissante et hydroscopique, et sont essentiellement des sels.

Les agents pénétrants sont des produits lipophiles qui permettent de traverser les parois végétales et faire circuler le produit dans la plante.

Les agents mouillants et étalants sont les mouillants qui permettent d'étaler les gouttes d'eau en cassant la tension superficielle et améliorer ainsi la surface de contact.

Les agents alourdisseurs de goutte permettent d'éviter qu'une partie du pesticide s'évapore dans l'air avec le vent.

Les agents anti-dérives limitent notamment la formation de petites gouttes sensibles à l'évaporation et la dérive du pesticide brumisé avec le vent.

A titre d'exemple d'agents conservateurs on pourra citer l'acide sorbique et les sorbates, l'acide benzoïque et les benzoates, les hydroxy benzoates, les dioxydes de soufre et les sulfites, l'acide lactique, l'acide propionique, les antioxidants dont l'acide ascorbique et les ascorbates, les hydroxy toluènes butylés, les hydroxy anisoles butylés, l'acide gallique et les gallates.

A titre d'exemple d'agents dispersants on pourra citer les composés naturels modifiés chimiquement comme les lignosulfonates et les substances de synthèse obtenues par polymérisation. Parmi les plus fréquemment utilisés se trouvent les dérivés d'alkylphénols et de tristyrylphénols, les dérivés d'alcools gras, les amides d'acides gras éthanolamine, les argiles, les argiles modifiées, les dérivés de la cellulose dont l'hydroxyéthylcellulose.

A titre d'exemple d'agents antigels on pourra citer le propylène glycol.

A titre d'exemple d'agents antimousse on pourra citer les huiles minérales ou végétales associées à des cires, des alcools gras à longue chaîne, des acides gras saponifiés ou esthérifiés, les particules de silice ou de dérivés hydrophobes de silice, comme le polydiméthylsiloxane, les copolymères de polyéthylène et polypropylène glycol.

A titre d'exemple d'agents humectants on pourra citer les glycols tels que l'hexylène glycol, le butylène glycol, le propylène glycol, les acides alpha-hydroxylés comme l'acide lactique, les mélasses, les huiles minérales ou végétales.

A titre d'exemple d'agents pénétrants on pourra citer les huiles synthétiques, les huiles végétales, les huiles végétales modifiées.

A titre d'exemple d'agents mouillant et étalants on pourra citer les tensioactifs non ioniques, les tensioactifs cationiques, les tensioactifs anioniques, les amines, les alkylamines, les glucosides, éthoxylates, les oxides de polyéthylène, les super-mouillants à base de siloxanes et leurs dérivés comme les polyéthers de siloxanes.

A titre d'exemple d'agents alourdisseurs de goutte et d'agents anti-dérives on pourra citer les polysaccharides et les polyacrylamides.

A titre d'exemple d'agents collants et rétenteurs, on pourra citer les latex, les huiles, les polymères de pinène, les polymères solubles dans l'eau, les résines.

Avantageusement selon l'invention, la quantité de pesticide et/ou de produit de traitement des cultures utilisée dans la(les) composition(s) liquide(s) telle(s) que définie(s) ci-dessus est de 10% à 60% de la dose homologuée de pesticide et/ou de produit de traitement des cultures préconisée pour une action efficace.

Les compositions de l'invention présentent une activité comparable, voir meilleure, aux compositions phytosanitaires de l'art antérieur, tout en présentant une dose de pesticide et/ou de produit de traitement des cultures diminuée de 40% à 90% des quantités homologuées préconisées pour une action efficace.

Les compositions de l'invention sont destinées à être appliquée sur les feuilles des cultures. Ainsi l'invention concerne également les compositions liquides telles que définies ci-dessus pour une application foliaire sur les cultures, lesdites cultures étant telles que définies ci-dessus.

Selon l'invention, l'application foliaire des compositions de l'invention sur les cultures pourra être effectuée au moment de l'apparition des premières feuilles et/ou à tout autre moment jusqu'à la récolte des cultures.

Les compositions liquides de l'invention pourront avantageusement être utilisées en une quantité allant de 0,01 L à 5 L par hectare de culture, de préférence de 0,05 L à 2 L, et plus préférentiellement de 0,1 L à 1 L par hectare de culture.

L'invention a également pour objet l'utilisation des compositions liquides telles que définies ci-dessus pour :
- améliorer la croissance et le développement des cultures,
- améliorer le rendement des cultures,
- stimuler et renforcer les cultures face aux stress biotiques, notamment en améliorant leur résistance face aux agents phytopathogènes et/ou ravageurs, et/ou
- améliorer la qualité sanitaire des cultures, à savoir notamment baisser le taux de mycotoxines et limiter la dilution des protéines.

Les agents phytopathogènes, les ravageurs, les mycotoxines et les cultures sont tels que définis ci-dessus.

Les exemples suivants illustrent l'invention, ils ne la limite en aucune façon.

Une brève description des figures est faite ci-après. Les abréviations utilisées dans ces figures sont les suivantes :
- MMST : monométhylsilanetriol (composé de formule (I) dans laquelle X représente un hydrogène, et n représente indifféremment 1, 2 ou 3),
- SA : acide orthosilicique,
- DON : déoxynivalénol,
- NIV : nivalénol,
- TNT : témoin non traité,
- Prosaro 1L/ha : témoin traité avec une dose homologuée de Prosaro^{®} (1 litre de Prosaro^{®} par hectare de culture),
- Prosaro 0,3L/ha : témoin traité avec un tiers de la dose homologuée de Prosaro^{®} (0,3 litre de Prosaro ^{®} par hectare de culture),
- Prosaro 0,3L/ha + SA 0,25L/ha : témoin traité avec un tiers de la dose homologuée de Prosaro^{®} et avec 0,25 litre d'acide orthosilicique par hectare de culture,
- Prosaro 0,3L/ha + MMST 1L/ha: témoin traité avec un tiers de la dose homologuée de Prosaro^{®} et avec 1 litre de monométhylsilanetriol par hectare de culture.

Plus particulièrement, il faut comprendre par « 0,25 litre d'acide orthosilicique (SA) », une solution concentrée à 3% de SA, qui est appliquée en une quantité de 0,25 L/ha par traitement. Autrement dit, la quantité de SA appliquée par hectare de culture et par traitement est de 7,5 g.

De même, il faut comprendre par « 1 litre de monométhylsilanetriol (MMST) » une solution concentrée à 0,043% de MMST, qui est appliquée en une quantité de 1 L/ha par traitement. Autrement dit, la quantité de MMST appliquée par hectare de culture et par traitement est 0,43 g.

Ainsi, on applique environ 17 fois plus de SA que de MMST par hectare de culture. Cela signifie également qu'on applique environ 17 fois plus de silicium élément lorsque l'on utilise du SA que lorsque l'on utilise du MMST. En effet, les masses molaires de SA et de MMST sont proches (respectivement de 96,1 et 94,1) et le pourcentage de silicium élément présent dans MMST est de 29,8% et dans SA est de 29,2%.

La solution de MMST a été synthétisée selon un procédé de préparation développé par un des Inventeurs en collaboration avec le département de Chimie de l'Institut Universitaire de Technologie Robert Schumann, rattaché à l'Université Louis Pasteur de Strasbourg. Les lots expérimentaux ont été contrôlés au laboratoire Analytique Inorganiques du CNRS à l'ECPM de l'Université de Strasbourg.

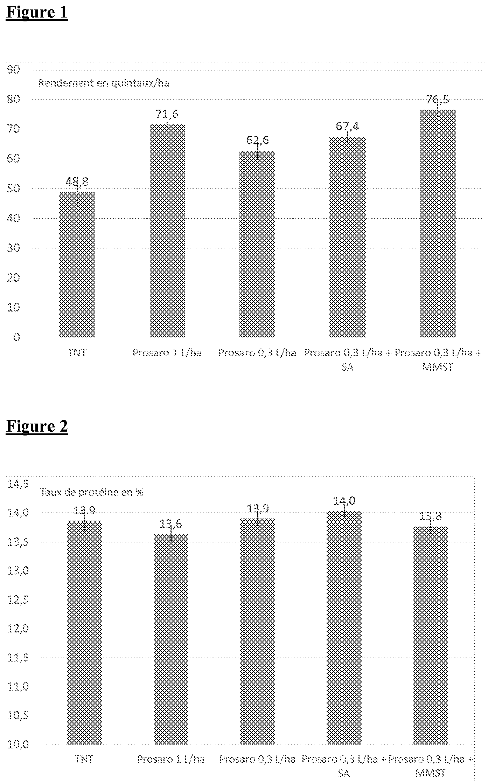

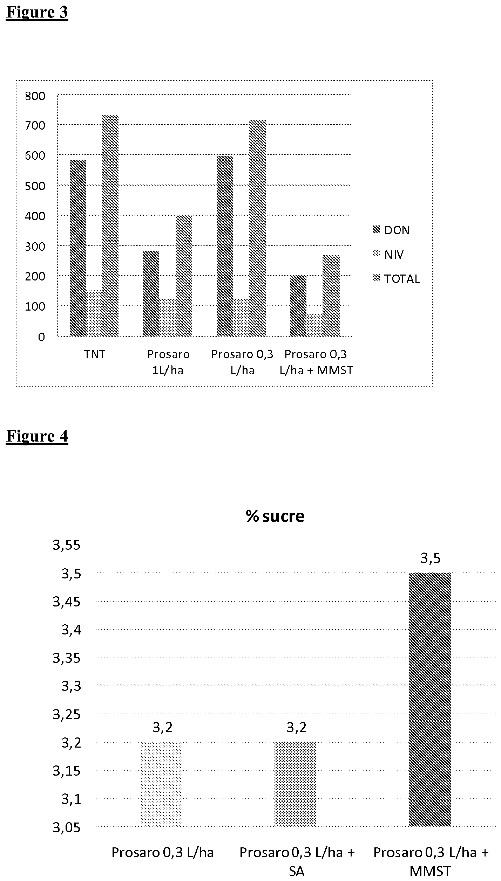

Les **Figures 1 à 3** sont des histogrammes illustrant respectivement les résultats obtenus :
- sur le rendement du blé (exprimé en quintaux par hectare) (fig.1),
- sur la teneur en protéines du blé (exprimée en pourcentage) (fig. 2),
- sur la teneur en mycotoxines DON et NIV du blé (exprimée en microgramme par kilogramme de blé) (fig. 3)
lorsque le blé :
- n'est pas traité (TNT),
- est traité avec Prosaro^{®} seul à 2 doses différentes (1 L/ha et 0,3 L/ha),
- est traité avec Prosaro^{®} (0,3 L/h) associé avec 0,25 L/ha de SA (fig. 1 et 2) ou avec 1L/ha de MMST (fig. 1 à 3).

La **Figure 4** est un histogramme illustrant la teneur en sucre (exprimée en pourcentage) présente dans le blé, lorsque le blé :
- est traité avec Prosaro^{®} seul (0,3 L/ha),
- est traité avec Prosaro^{®} (0,3 L/h) associé avec 0,25 L/h de SA (fig. 1 et 2) ou avec 1 L/ha de MMST.

La **Figure 5** est un histogramme illustrant l'électro-conductivité EC (exprimée en milli-siemens par centimètre (mS/cm)) du blé, lorsque le blé :
- est traité avec Prosaro^{®} seul (0,3 L/ha),
- est traité avec Prosaro^{®} (0,3 L/h) associé avec 0.25 L/h de SA (fig. 1 et 2) ou avec 1 L/ha de MMST.

La **Figure 6** est un histogramme illustrant la teneur en silicium (exprimée en ppm ou mg/kg) présente dans les épis de blé, lorsque le blé :
- est traité avec Prosaro^{®} seul (0,3 L/ha),
- est traité avec Prosaro^{®} (0,3 L/h) associé avec 0,25 L/h de SA (fig. 1 et 2) ou avec 1 L/ha de MMST.

La **Figure 7** est un histogramme illustrant les résultats obtenus sur le rendement du tournesol (exprimé en quintaux par hectare), lorsque le tournesol :
- n'est pas traité (TNT),
- est traité avec 1 L/ha de MMST,
- est traité avec 0,25 L/ha de SA.

La **Figure 8** est un histogramme illustrant les résultats obtenus sur la teneur en huile présente dans les graines de tournesol (exprimée en pourcentage), lorsque le tournesol :
- n'est pas traité (TNT),
- est traité avec 1 L/ha de MMST,
- est traité avec 0,25 L/ha de SA.

La **Figure 9** est un histogramme illustrant les résultats obtenus sur l'augmentation de biomasse moyenne de matières fraîches et sèches par plant exprimée en pourcentage par rapport au témoin lorsqu'une culture d'épinards et trois cultures de salades sont traitées avec 1 L/ha de MMST.

La **Figure 10** est un histogramme illustrant les résultats obtenus sur la hausse de teneur en éléments minéraux majeurs exprimée en pourcentage du témoin lorsqu'une culture d'épinards et trois cultures de salades sont traitées avec 1 L/ha de MMST ainsi que les valeurs moyennes de hausse de teneur par élément sur les 4 cultures.

### Exemple 1 :

Effets du MMST sur le rendement du blé, sur le taux de protéines présentes dans le blé, sur le taux de mycotoxines DON et NIV présentes dans le blé et sur la physiologie du blé.

### Dispositif expérimental

Les essais ont été réalisés sur la plateforme agro-écologique de Toulouse, sur la variété de blé « Babylone », au moment de la floraison (mois de mai).

Le champ de blé est divisé en micro-parcelles afin de préparer respectivement :
- une parcelle non traitée (TNT),
- une parcelle traitée avec Prosaro^{®} à la dose homologuée (Prosaro 1L/ha),
- une parcelle traitée avec Prosaro^{®} au tiers de la dose homologuée (Prosaro 0,3 L/ha),
- une parcelle traitée avec Prosaro^{®} au tiers de la dose homologuée et avec 0,25 L/ha d'acide orthosilicique (Prosaro 0,3 L/ha + SA 0,25 L/ha)),
- une parcelle traitée avec Prosaro^{®} au tiers de la dose homologuée et avec 1 L/ha de MMST (Prosaro 0,3 L/ha + MMST 1 L/ha).

Le MMST a été testé en association avec le fongicide Prosaro^{®} car ce fongicide associe au tébuconazole, une des substances actives recommandée sur *Fusarium,* du prothioconazole, seule substance active qui à l'heure actuelle fonctionne significativement et régulièrement contre les souches fongiques de *Microdochium nivale* ayant développé des multi-résistances.

L'efficacité de Prosaro^{®} est sensible à la dose minimale de 70% de la dose homologuée selon l'expérience des essais de ces dernières années. À moins de 60% l'efficacité décroit sensiblement.

Les prélèvements de blé réalisés comprennent la dernière feuille de blé et l'épi. Les prélèvements sont broyés puis analysés.

Afin de pouvoir réaliser des analyses statistiques sur les données collectées, il est nécessaire de mettre en place des blocs. Dans cet essai 3 blocs ont été mis en place. Un bloc est un groupe de parcelles dans lesquelles l'environnement à observer est homogène. Chaque traitement figure une et une seule fois dans chaque bloc. Les traitements sont distribués de manière aléatoire à l'intérieur des blocs, qui jouent le rôle de répétitions. L'attribution des traitements dans chaque bloc est aléatoire. La disposition des blocs a pour but de contrôler l'hétérogénéité du site (par ex. pente, direction du travail lors du semis ou de la plantation, exposition, degré d'infestation, etc.), des végétaux (taille, âge, vigueur) ou des conditions lors de l'essai (application des traitements, notations).

### 1) Rendement du blé

Les résultats sur le rendement du blé sont illustrés sur l'histogramme de la figure 1. Le rendement du blé, lorsqu'il n'est pas traité, est de 48,8 qx/ha. Lorsque le blé est traité avec Prosaro^{®} à la dose homologuée, le rendement du blé passe à 71,6 qx/ha.

Les pertes de rendement en l'absence de fongicide révèlent notamment la présence de *Microdochium nivale.*

De façon surprenante, lorsque le blé est traité avec seulement un tiers de la dose homologuée de Prosaro^{®} et avec 1 L/ha de MMST, le rendement du blé est alors de 76,5 qx/ha, soit un rendement supérieur à celui observé lorsque le blé est traité avec du Prosaro^{®} à la dose homologuée.

Ainsi, associer le MMST à un fongicide permet de réduire fortement la dose appliquée dudit fongicide tout en permettant un rendement de blé encore amélioré par rapport à l'utilisation d'une pleine dose homologuée de fongicide.

### 2) Teneur en protéines présentes dans le blé

Les résultats de la teneur en protéines sont illustrés sur l'histogramme de la figure 2. Lorsque le blé n'est pas traité, la teneur en protéines est de 13,9%. Lorsqu'il est traité avec Prosaro^{®} à la dose homologuée, la teneur est de 13,6%. Lorsque le blé est traité avec un tiers de la dose homologuée de Prosaro^{®} et avec 1 L/ha de MMST, la teneur en protéines est de 13,8%. Malgré une augmentation significative du rendement, il n'y a pas de dilution de la teneur en protéines.

De façon avantageuse, l'association du MMST avec le fongicide Prosaro^{®} permet donc d'améliorer le rendement du blé, tout en évitant la dilution de la teneur en protéine lié à l'augmentation de rendement ce qui permet de maintenir le taux de protéines du blé à rendement supérieur.

La teneur en protéines du blé est en effet un critère qualitatif incontournable dans le marché du blé qui est principalement destiné à l'alimentation animale et humaine. La teneur en protéines d'un lot de blé est calculée à partir de sa quantité de matières azotées totales N (exprimée sur une base matière sèche) multipliée par un coefficient égal à 5,7 pour un blé destiné à l'alimentation humaine et à 6,25 pour un blé destiné à l'alimentation animale. Elle se mesure selon 2 méthodes de référence : une méthode chimique dite méthode Kjeldahl et une méthode physique par combustion dite méthode Dumas.

Les résultats de l'invention sont d'autant plus encourageants qu'il existe une relation négative entre le rendement et la teneur en protéines : en effet, à niveau de fertilisation équivalent, plus le rendement de la variété est élevé, plus sa teneur en protéines est faible. Pour atteindre des teneurs en protéines beaucoup plus élevées, il est nécessaire d'accepter parfois des rendements plus faibles. Ceci est plus particulièrement le cas des blés à haute teneur en protéines.

A titre indicatif, les exigences requises pour la fabrication de différents produits de la boulangerie/viennoiserie/pâtisserie, concernant la teneur en protéines (exprimée en pourcentage) sont les suivantes (source : enquêtes ARVALIS - Institut du végétal) :
- pain cru : 10,5-11,5%,
- brioche, croissant frais : 11-13%,
- croissant surgelé : 12-14%.

### 3) Teneur en mycotoxines présente dans le blé

L'analyse de la teneur en mycotoxines DON et NIV montre que la variété de blé comprend sur le témoin une quantité totale de DON et de NIV allant de 600 à 1000 microgrammes par kilogramme de blé. Pour rappel, la présence de DON et de NIV révèle notamment la présence de *Fusarium graminearum.*

On constate donc que la pression de mycotoxines est en dessous des seuils règlementaires sur la parcelle témoin. En effet, la limite maximale règlementaire fixée en alimentation humaine, pour la teneur en DON et NIV des lots de blé est de 1250 µg/kg.

Les niveaux de pression sont donc modérés et ne posent donc pas de problème sanitaire, même dans le témoin non traité, révélant ainsi de faibles contaminations par *Fusarium graminearum.*

L'ensemble des résultats de la teneur en mycotoxines sont illustrés sur l'histogramme de la figure 3.

Lorsque le blé n'est pas traité, il comporte une teneur totale en DON et NIV de 731 µg/kg. Lorsqu'il est traité avec Prosaro^{®} à la dose homologuée (1 L/ha), la teneur totale en mycotoxines n'est plus que de 399 µg/kg. De façon surprenante, lorsque le blé est traité avec seulement un tiers de la dose homologuée de Prosaro^{®} (0,3 L/ha) et avec 1 L/ha de MMST, la teneur totale en mycotoxines n'est plus que de 268 µg/kg.

Dans le contexte d'une faible teneur en mycotoxines lors de cette expérimentation, on observe donc une réduction de la teneur en mycotoxines lorsque le MMST est associé avec seulement un tiers de la dose homologuée du fongicide Prosaro^{®}, supérieure à celle obtenue avec la dose homologuée de fongicide.

### Conclusion des points 1), 2) et 3) :

L'efficacité constatée pour augmenter le rendement semble indiquer un triple effet sur le blé:
- stimulation de la croissance avec effet sur le rendement du blé (effet quantitatif),
- maintien de la qualité du blé, à savoir pas de baisse du taux de protéines, tout en ayant un rendement accru (effet qualitatif),
- renforcement de la plante face à *Fusarium graminearum* et *Microdochium nivale* (effet qualitatif).

L'association du MMST avec le fongicide permet avantageusement de diminuer de deux tiers la dose homologuée de fongicide, tout en améliorant à la fois le rendement de la culture et le renforcement de ladite culture (diminution du taux de mycotoxines) par rapport à l'utilisation de la dose homologuée de fongicide.

### 4) Physiologie du blé

### a) Teneur en sucre

De manière générale, la teneur en sucre présente dans la plante est un bon indicateur de la qualité de la plante et du fruit qui en découle. Plus particulièrement, la teneur en sucre dans la sève est un bon indicateur de sa vigueur (niveau d'énergie) et, par voie de conséquence, de sa résistance aux maladies et parasites.

La teneur en sucre présente dans le blé est illustrée à la figure 4.

Lorsque le blé est traité avec un tiers de la dose homologuée de Prosaro^{®} (0,3 L/ha), la teneur en sucre est de 3,2%. L'association de SA (à 0,25 L/ha) avec un tiers de la dose homologuée de Prosaro^{®} ne permet pas d'augmenter la teneur en sucre.

Cependant, de façon surprenante, lorsque le blé est traité avec un tiers de la dose homologuée de Prosaro^{®} et avec du MMST (à 1 L/ha), la teneur en sucre est de 3,5%.

L'association du MMST avec un tiers de la dose homologuée de Prosaro^{®} permet donc d'augmenter la teneur en sucre, permettant ainsi de renforcer la physiologie du blé, et ceci de manière plus significative qu'avec l'association du SA avec un tiers de la dose homologuée de Prosaro^{®}.

### b) Electro-conductivité

L'électro-conductivité (EC) est une caractéristique d'une solution qui contient des ions : en effet, la plupart des nutriments absorbés par la plante sont des ions. La valeur de l'EC quantifie la richesse en ions dans la solution en mesurant la conductivité de la solution qui est directement liée à la concentration en ions dans la solution.

La mesure de l'électro-conductivité permet ainsi d'évaluer le rôle du MMST sur l'assimilation améliorée des éléments nutritifs nécessaire à la plante tels que le phosphore (P), le potassium (K), l'azote (N), le calcium (Ca).

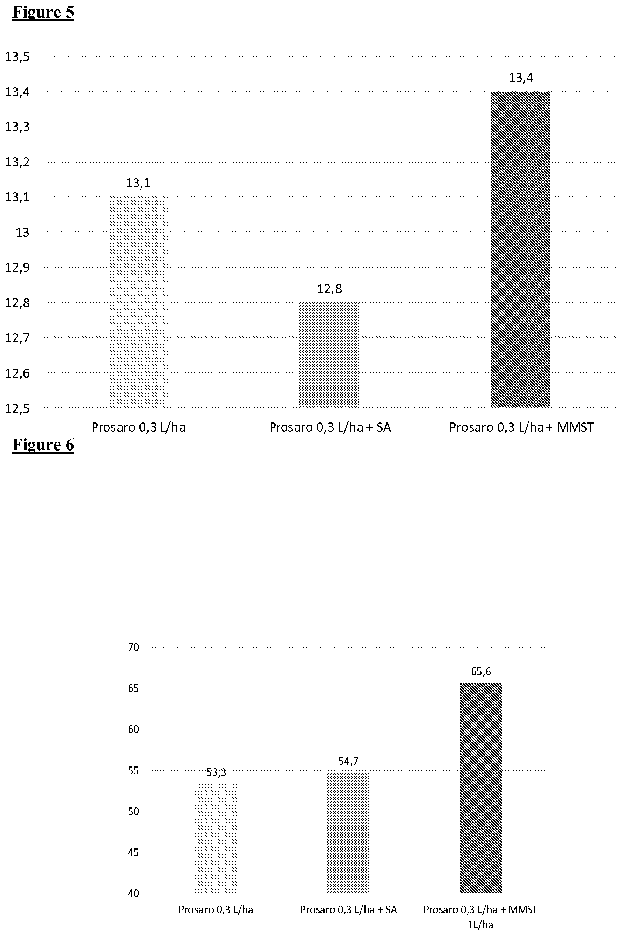

L'EC est illustrée à la figure 5.

Lorsque le blé est traité avec un tiers de la dose homologuée de Prosaro^{®} (0,3 L/ha), l'EC est de 13,1 mS/cm. L'association de SA (à 0,25 L/ha) avec un tiers de la dose homologuée de Prosaro^{®} ne permet pas d'augmenter l'EC.

Cependant, de façon surprenante, lorsque le blé est traité avec un tiers de la dose homologuée de Prosaro^{®} et avec du MMST (à 1 L/ha), l'EC est de 13,4 mS/cm.

L'association du MMST avec un tiers de la dose homologuée de Prosaro^{®} permet donc d'augmenter l'EC du blé, permettant ainsi de renforcer la physiologie du blé et ceci de manière plus significative qu'avec l'association du SA avec un tiers de la dose homologuée de Prosaro^{®}.

### c) Teneurs en silicium

Les analyses de la teneur en silicium présente dans le blé ont été effectuées 1 mois après le traitement du blé.

Le blé est respectivement traité avec :
- un tiers de la dose homologuée de Prosaro^{®},
- un tiers de la dose homologuée de Prosaro^{®} et 1 L/ha de MMST,
- un tiers de la dose homologuée de Prosaro^{®} et 0,25 L/ha de SA.

Les résultats obtenus sont représentés à la figure 6. Lorsque le blé est traité avec un tiers de la dose homologuée de Prosaro^{®}, la teneur en silicium dans le blé est de 53,3 ppm. L'association de 0,25 L/ha de SA avec un tiers de la dose homologuée de Prosaro^{®} confère au blé ainsi traité une teneur en silicium de 54,7 ppm, ce qui représente une augmentation de 2,6%.

Lorsque le blé est traité avec un tiers de la dose homologuée de Prosaro^{®} et avec 1 L/ha de MMST, alors la teneur en silicium est de 65,6 ppm, ce qui représente une augmentation de 23%.

Ainsi, l'association de MMST avec un tiers de la dose homologuée de Prosaro^{®} permet une plus forte augmentation de la teneur en silicium du blé que l'association de SA avec un tiers de la dose homologuée de Prosaro^{®}, permettant ainsi de renforcer la physiologie du blé.

Ce résultat montre que l'augmentation de la teneur en silicium des tissus végétaux dans la dernière feuille et l'épi de blé, est près de 9 fois supérieure avec une application de MMST qu'avec une application de SA, pour une quantité de MMST appliquée plus de 17 fois inférieure, ce qui montre une meilleure assimilation de la silice dans le végétal avec MMST.

### Exemple 2

Effets du MMST sur le rendement du tournesol et sur la teneur en huile présente dans les graines de tournesol

### a) Rendement du tournesol

Le traitement du tournesol, de variété Shakira, a été effectué à bouton apparent, sur la plateforme agro-écologique de Toulouse, au mois de juin.

L'essai sur tournesol est divisé en 3 parcelles en bandes :
- une parcelle non traitée,
- une parcelle traitée avec 1 L/ha de MMST.
- une parcelle traitée avec 0,25 L/ha de SA.

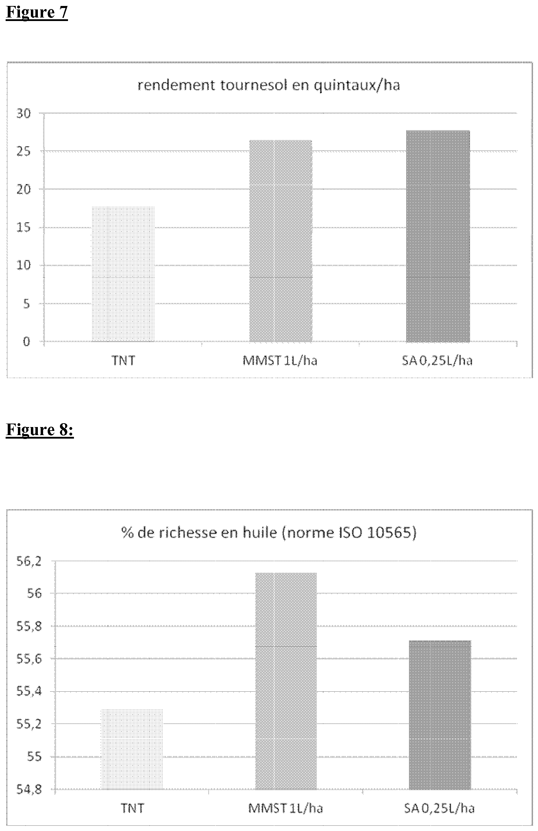

Les résultats obtenus sont représentés à la figure 7. Lorsque le tournesol n'est pas traité, le rendement est de 15 quintaux par hectare. Lorsque le tournesol est traité avec 0,25 L/ha de SA, le rendement est d'environ 24,4 quintaux par hectare. Lorsque le tournesol est traité avec 1 L/ha de MMST, le rendement est d'environ 24,6 quintaux par hectare. Les augmentations de rendement obtenues sont équivalentes pour SA et MMST.

L'utilisation d'une forme organique de silicium présentée sous forme de SA ou MMST permet donc d'augmenter le rendement des cultures de manière importante (dans cet exemple plus de +60% par rapport au témoin). Cette augmentation a cependant été obtenue en utilisant des doses de MMST plus de 17 fois inférieures à celles de SA.

Ce résultat s'ajoute au précédent et suggère que l'efficience de l'apport de silicium est considérablement plus élevée lorsqu'il est apporté sous forme de MMST.

### b) Teneur en huile présente dans les graines de tournesol (exprimée en pourcentage).

La qualité des graines de tournesol est notamment évaluée par les teneurs en huile présentes dans les graines de tournesol.

La teneur en huile du tournesol est très variable, avec des effets année, variétés et fertilisation azotée. On peut observer une variation au sein d'une même variété chaque année (liée aux différences d'environnement et de conduite) d'environ 10 pour cent.

Lorsque le tournesol n'est pas traité (TNT), on observe une teneur en huile de 55,29%. Lorsque le tournesol est traité avec 0,25 L/ha de SA, la teneur en huile passe à 55,71%, soit une augmentation de 0,42 pour cent (%). Lorsque le tournesol est traité avec 1 L/ha de MMST, la teneur en huile passe à 56,13%, soit une augmentation de 0,84 pour cent. Dans cet essai le composé (I) apporte à lui seul près de 1 pour cent d'huile sans aucun apport de fertilisation azotée.

L'utilisation de MMST a donc permis une augmentation du rendement sans dilution de la qualité, et montre même une tendance à améliorer la qualité y compris à rendement supérieur et à qualité de haut niveau.

### Exemple 3

### Composition comprenant du MMST pour améliorer le rendement du maïs.

Dans le but d'évaluer l'intérêt de développer des compositions associant le MMST à des produits de nutrition des plantes, une composition dénommée « SKBM + calcite » est préparée.

D'une part une composition liquide « SKBM » comprenant les matières actives suivantes est préparée :
- MMST : 2 ml/L,
- Borate de sodium : 20% p/p (engrais oligoélément),
- Sulfate de magnésium : 15% p/p (engrais élément secondaire),
- Eau : qsp 1L (agent de formulation).

D'autre part une poudre de calcite (fertilisant) finement micronisée est préparée.

La composition « SKBM » est mélangée à la poudre de calcite de façon extemporanée, pour obtenir la composition « SKBM + calcite ».

Un essai randomisé à 4 répétitions est conduit conformément aux standards BEP (Bonnes Pratiques d'Expérimentation), sur du maïs fourrage, variété Keops KWS.

Un traitement unique est appliqué au stade 4 à 6 feuilles avec 300 L d'eau par hectare.

L'essai comporte deux modalités :
- un témoin,
- une modalité traitée avec la composition « SKBM + calcite » ; la composition « SKBM » est apportée en une quantité de 1 L/ha, et est additionnée de calcite micronisée à 350 g/ha.

Le tableau ci-dessous présente les valeurs de rendement obtenues.

| modalités | rendement feuilles et tiges | | rendement épis | | rendement total | |
|---|---|---|---|---|---|---|
| | qx/ha | relatif | qx/ha | relatif | qx/ha | relatif |
| 1 - Témoin non traité | 425,6 | 100,0 | 216,0 | 100,0 | 641,7 | 100,0 |
| 2 - SKBM+Calcite (1,0+0,35 l/kg/ha) | 459,7 | 108,0 | 226,6 | 104,9 | 686,3 | 107,0 |

Lorsque le maïs n'est pas traité, le rendement total est de 641,7 quintaux par hectare.

Lorsque le maïs est traité avec la composition « SKBM + Calcite » le rendement total est porté à 686,3 quintaux par hectare.

L'augmentation obtenue se traduit donc par un gain de 7% de rendement total.

Le rendement total a été mesuré en ajoutant le rendement en tiges et feuilles au rendement en épis. Lorsque le maïs n'est pas traité, le rendement « épis » est de 216 quintaux par hectare. Lorsque le maïs est traité avec la composition « SKBM + Calcite » le rendement « épis » est de 226,6 quintaux par hectare.

L'augmentation de rendement obtenue sur « épis » est de 4,9%.

### Conclusion :

L'utilisation de silicium sous forme de MMST dans une composition l'associant à d'autres éléments de nutrition des plantes permet donc d'augmenter le rendement des cultures de maïs, dans cet exemple de plus de 7% par rapport au témoin.

L'augmentation de rendement obtenue sur épis suggère un potentiel intéressant du MMST également sur le maïs grain.

### Exemple 4

### Test d'assimilation du silicium sur blé dur

Une composition dénommée « MMST + MZC », comprenant du MMST associé à des oligo-éléments sous formes de sulfates (engrais), est préparée avec les proportions suivantes :
- MMST : 2 ml/L,
- Manganèse : 16 g/L (oligo-élément),
- Zinc : 8 g/L (oligo-élément),
- Cuivre : 4 g/L (oligo-élément),
- Eau : qsp 1 L.

Un test d'assimilation du silicium sur blé dur de variété Anvergur est conduit près de Toulouse.

Cet essai comporte trois blocs :
- un témoin non traité,
- une modalité traitée avec du MMST seul en une quantité de 2 ml/L dilué dans l'eau à 1/150, et appliquée à 150 L/ha,
- une modalité traitée avec la composition « MMST+MZC » également diluée dans l'eau à 1/150, et appliquée à 150 L/ha.

L'application à 150 L/ha du MMST dilué dans l'eau à 1/150 signifie l'application d'une dilution à 1/150 dans un pulvérisateur agricole d'une composition de MMST à 2 ml/L, soit 0,2% du poids total de la composition, ce qui correspond donc à une quantité de MMST appliqué de 2×10⁻³L par hectare.

Des prélèvements de la dernière feuille et de l'épi sont effectués au centre de chaque bloc; les échantillons sont analysés au laboratoire Aurea par la méthode NF EN ISO 11885.

Lorsque le blé n'est pas traité, la teneur moyenne totale en Si est de 1840 mg/kg.

Lorsque le blé est traité avec le MMST seul, dilué à l'eau, la teneur moyenne est de 1889 mg/kg.

Lorsque le blé est traité avec la composition MMST + MZC », la teneur moyenne est de 1892 mg/kg.

Une augmentation de 3% de la teneur globale en silice de la dernière feuille et de l'épi est observée dans les deux cas, à savoir lorsque le MMST est appliqué seul ou lorsque le MMST est appliqué en association avec le fertilisant et les engrais.

### Conclusion

L'application de MMST, seul ou en association avec un produit de traitement des cultures, a une action bénéfique sur la physiologie végétale, se traduisant notamment par une plus grande exportation de silicium vers les parties aériennes, avec des apports quantitatifs par hectare étonnamment minimes.

### Exemple 5

Effets d'une composition de traitement foliaire des plantes comprenant du MMST pour renforcer le blé

La septoriose des céréales, Septoria Tritici est la maladie la plus nuisible en France sur céréales. La perte de rendement peut monter à plus de 40 quintaux par hectare dans le nord de la France. Les résistances se développent à un rythme préoccupant, et il devient primordial de trouver de nouvelles solutions pour renforcer la protection des cultures.

Une composition phytosanitaire diluée dénommée « MMST+VS », comprenant du MMST et des fongicides est préparée dans un pulvérisateur selon la formule suivante :
- MMST à 2 ml/L : 1L,
- un fongicide « Héliosoufre^{®}) » (à base de soufre micronisée) : 1 L,
- un fongicide conventionnel « Viverda^{®} » (comprenant boscalid 140 g/l, pyraclostrobine 60 g/l et époxiconazole 50 g/l), dosé à 50% de la dose recommandée : 0,5 L,
- un adjuvant à base d'alcool terpénique : 100 g,
- Eau : q.s.p. 100 L.

Un essai de 3 répétitions en blocs randomisés est conduit près de Toulouse sur blé tendre, de variété Ascott.

L'essai comporte 4 modalités :
- un témoin non traité,
- une modalité de référence haute, traitée avec le fongicide de référence Viverda^{®} à pleine dose recommandée de 1 L par hectare,
- une modalité de référence basse traitée avec le produit fongicide de référence Viverda^{®} à demi dose de 0,5 L par hectare,
- une modalité traitée avec la composition « MMST+VS ».

Deux traitements T1 et T2 sont appliqués respectivement au stade 1 à 2 noeuds, puis au stade dernière feuille étalée.

Sur les feuilles de blé, les symptômes de nécroses de la septoriose ne sont pas encore visibles.

L'efficacité du premier traitement est mesurée sur le troisième étage foliaire (F3) 21 jours après le traitement T2 à partir du pourcentage de surface foliaire nécrosée rapporté au témoin non traité.

L'efficacité du second traitement est mesurée sur le premier étage foliaire 36 jours après le traitement T2.

Pour le premier traitement, l'efficacité de la composition phytosanitaire diluée « MMST + VS » est de 72%, cette efficacité est supérieure à celle de la référence haute à 52%, le fongicide à demi dose contribuant à la protection avec une efficacité de 37%.

Ajouté à un fongicide conventionnel, le MMST accompagné d'un autre fongicide à base de soufre a considérablement augmenté l'efficacité de la protection sur F3, au stade d'incubation de la septoriose.

Pour le second traitement, l'efficacité de la composition phytosanitaire diluée « MMST + VS » est de 83%, cette efficacité est supérieure à celle de la référence haute à 81%, le fongicide à demi dose apportant une efficacité de 79%.

L'efficacité obtenue avec la composition phytosanitaire diluée « MMST+VS » est supérieure à celle de la référence haute pour améliorer l'efficacité de la protection du blé attaqué par la septoriose.

Cet essai confirme donc le potentiel d'une composition fongicide diluée telle qu'elle peut être préparée dans un pulvérisateur agricole en associant le MMST à un ou plusieurs fongicide(s) naturel(s) ou de synthèse(s) pour donner des nouveaux outils performants à la protection des plantes, dans un contexte où de nouvelles solutions sont recherchées face au développement préoccupant des résistances, et cela en permettant de réduire l'utilisation des pesticides.

### Exemple 6

### Effets du MMST sur la qualité des céréales

La teneur en protéines des céréales est un critère important de qualité pour répondre aux exigences des différents marchés (meunerie, amidonnerie, alimentation animale, export).

Dans cet essai, nous avons étudié l'effet d'une application séparée de MMST à 2 ml/L sur le taux de protéine à la récolte. Cet essai comporte deux répétitions et deux modalités par variété : un témoin non traité et une modalité traitée au stade floraison avec 1 L de MMST.

Dans cet essai, la fertilisation optimale a permis à chaque variété d'exprimer son potentiel de rendement, et les rendements obtenus avec le traitement MMST 1 L/ha ne sont que légèrement supérieurs (75,4 quintaux par hectare en moyenne) à ceux obtenus sans traitement (74,1 quintaux par hectare en moyenne).

Le tableau ci-dessous indique les valeurs de teneur en protéines (exprimée en pourcentage) pour les 13 variétés de blé et pour les deux modalités, TNT (témoin non traité) et traité avec 1 L/ha de MMST.

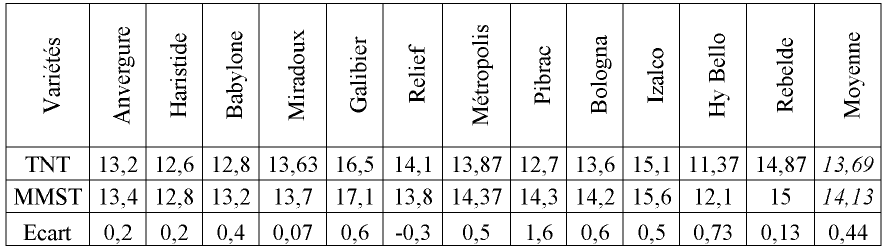

L'analyse de la teneur en protéine des différentes variétés de blé démontre l'effet d'une application foliaire séparée de MMST dans un contexte de fertilisation et de protection complète.

En moyenne, sur les 13 variétés de blé, MMST procure +0,44% de protéines en plus par rapport au témoin. Compte tenu de l'enjeu du taux de protéine pour la valorisation des céréales sur le marché, ce gain est très important.

L'effet de l'application de MMST varie fortement selon les variétés.

On peut considérer qu'au-delà d'une augmentation de +0,2% de taux de protéine par rapport au témoin, le gain est significatif pour le producteur. Ainsi l'application de MMST augmente le taux de protéines d'une manière significative et valorisable sur 77% des variétés testées.

### Exemple 7

Utilisation du MMST pour stimuler la croissance de différentes cultures

### maraichères.

### Essai de fertilisation

L'essai a été mis en place sur différentes cultures maraîchères : la mâche, l'épinard, la feuille de chêne et la laitue.

Deux répétitions ont été mises en place avec des témoins adjacents.

Les cultures ont reçu 2 applications de 2 L d'une composition contenant de l'eau et du MMST à 2 ml/L soit 0,2% de son poids total, à 1 semaine d'intervalle, laquelle composition est appliquée diluée dans un volume de bouillie de 200 L/ha ce qui correspond donc à une quantité de MMST appliqué de 4×10⁻³ L par hectare. Le volume de bouillie est la quantité totale du mélange réalisé dans le pulvérisateur agricole.

Les prélèvements des échantillons pour les pesées et les analyses ont été réalisés au plus près de la récolte, 15 jours après le dernier traitement.

La pression mildiou était très importante sur la laitue et l'épinard.

Analyse des pesées de biomasses fraîches et sèches :
- prélèvement de 6 plants au centre de chaque bloc,
- pesées de biomasses fraîches,
- séchage en étuve pendant 48 h à 80°C,
- pesées de biomasses sèches,
- analyses de teneur en éléments minéraux.

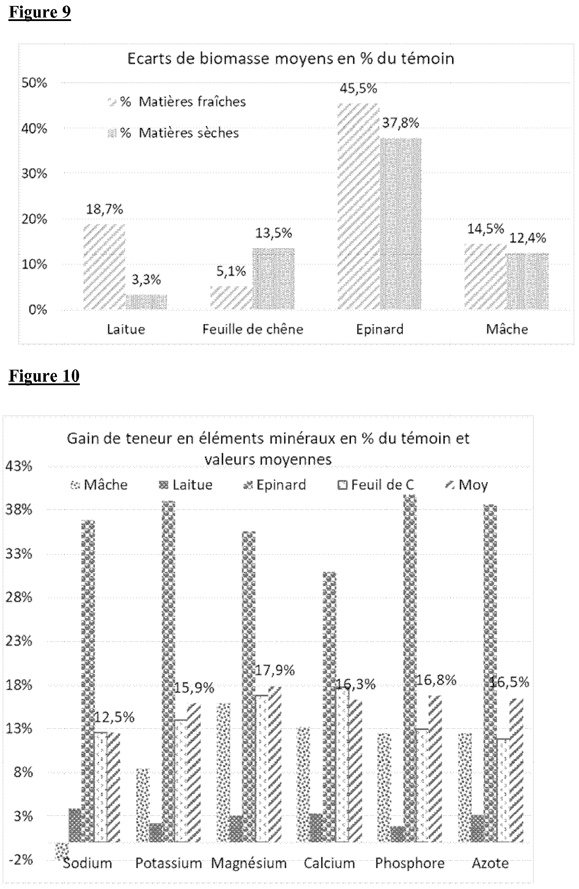

La figure 9 présente les écarts en pourcentage par rapport au témoin en biomasse fraîche et sèche, suite à l'application du MMST.

Les biomasses en matières fraîches et sèches ont augmenté sur les 4 cultures avec l'utilisation de MMST, avec des écarts de 3% à 45% selon les cultures.

On note un effet significatif sur la laitue, la feuille de chêne et l'épinard. Le gain le plus important est constaté pour l'épinard, la pression du mildiou sur cet essai pouvant contribuer à expliquer une partie de cet écart.

### Essai sur le mildiou de l'épinard

Le mildiou de l'épinard est la maladie majeure de l'épinard (6 souches existantes en France), qui engendre un déclassement de la récolte et parfois une condamnation de la parcelle.

L'efficacité des techniques curatives, n'est pas constante au fil du temps, suite au développement des résistances. C'est pourquoi, il est d'actualité de trouver de nouvelles méthodes de lutte par des produits stimulants les plantes en alternative ou complément aux techniques utilisées actuellement.

L'essai comporte deux modalités :
- une modalité « fongicide » traitée avec une référence fongicide contenant du « fluopicolide » à 62,5 g/l et du « propamocarbe - chlorhydrate » à 625 g/l,
- une modalité « MMST » traitée avec du MMST à 4×10⁻³ L/ha.

Le niveau d'intensité de présence de mildiou est noté.

La modalité MMST présente une intensité d'attaque inférieure de 9% à la modalité fongicide, dans la même classe statistique.

### Conclusion :

Cet essai montre de manière surprenante que MMST appliqué seul a un effet sur le renforcement physiologique de l'épinard suffisant pour permettre un contrôle préventif du mildiou comparable à celui obtenu par l'emploi d'un fongicide, dans les conditions de l'essai.

Sans que la différence soit significative statistiquement, on observe en moyenne un gain d'efficacité et une meilleure homogénéité avec le MMST comparé à la référence « fongicide ».

### Test de conservation après récolte

L'antépénultième feuille déroulée sur chaque plant a été prélevée, à la fois sur la culture traitée par le MMST et sur le témoin (2 répétitions).

Les échantillons ont été déposés sur une surface plane et pris en photos à intervalles réguliers (6 heures), afin de mesurer l'effet des applications de MMST sur la conservation après récolte. Les conditions d'études varient entre 20,9 et 21,3 °C et entre 47 et 59% d'hygrométrie.

### Conclusion :

L'application de MMST a permis de prolonger la durée sans flétrissement dans le cas de la feuille de chêne, de la mâche et de l'épinard, comme l'indique le tableau ci-dessous.

Tableau de synthèse des observations :

| Critères | Modalités | Laitue | Feuille de chêne | Mâche | Epinards |
|---|---|---|---|---|---|
| Nombres d'heures sans flétrissement | TNT | 14 h | 20 h | 8 h | 8 h |
| | MMST | 14 h | 26 h | 14 h | 50 h |
| Effet MMST en % du TNT | | 0% | + 30% | + 75% | +525% |
| | | Aucun | Significatif | Très significatif | Hautement significatif |

L'application de MMST est donc une solution prometteuse pour contribuer à améliorer la tenue au stockage de certaines cultures maraîchères, enjeu essentiel pour leur valorisation.

### Analyse de qualité

La figure 10 présente les augmentations relatives de teneur en éléments minéraux en pourcentage du témoin et les valeurs moyennes.

L'utilisation du MMST apporte un effet positif sur la concentration en éléments minéraux majeurs pour l'ensemble des salades et pour l'ensemble des éléments minéraux. L'application du MMST permet une meilleure assimilation de ces éléments avec en moyenne une amélioration de 12% par élément majeur.

Cet effet est d'autant plus intéressant qu'il accompagne une augmentation de rendement.

En effet, augmenter conjointement le rendement et la qualité est recherché dans toute la production végétale, car l'utilisation de produits permettant de booster la plante et les rendements se traduit souvent par une perte de qualité.

Cet essai montre que le MMST utilisé seul a un impact positif, significatif et valorisable sur la physiologie de diverses cultures, en améliorant le rendement, la qualité, la tenue au stockage et l'état sanitaire des plantes.

## Revendications

1. Utilisation d'un composé répondant à la formule (I) suivante :
Si(CH₃)(OH)₃₋ₙ(OX)ₙ (I)
dans laquelle X est un atome d'hydrogène ou un métal alcalin, notamment choisi parmi le lithium, le sodium ou le potassium et n est un entier allant de 1 à 3,
pour une application foliaire sur les cultures, lesdites cultures étant notamment choisies dans le groupe comprenant :
- les grandes cultures, notamment celles choisies parmi les céréales, les oléagineux, les protéagineux, les légumineuses fourragères, les graminées fourragères ou les cultures sucrières,
- les cultures légumières ou maraîchères, notamment les légumes frais,
- les cultures fruitières, notamment celles choisies parmi les fruits à noyaux, les fruits à pépins, les fruits à amandes, les fruits en grappe, les petits fruits ou les fruits des régions chaudes,
- les plantes aromatiques et médicinales,
- les cultures florales et ornementales,
et leurs mélanges,
et pour son action propre sur le métabolisme des cultures, à savoir pour :
- améliorer la croissance et le développement des cultures,
- améliorer le rendement des cultures,
- stimuler et renforcer les cultures face aux stress biotiques, notamment en améliorant leur résistance face aux agents phytopathogènes et/ou ravageurs, et/ou
- améliorer la qualité sanitaire des cultures, à savoir notamment baisser le taux de mycotoxines et limiter la dilution des protéines,
ledit composé (I) étant sous forme liquide et étant utilisé en une quantité allant de 10⁻⁵ L à 1 L par hectare de culture, de préférence de 2×10⁻⁵ L à 0,2 L par hectare de culture, et plus préférentiellement de 4×10⁻⁵ L à 4×10⁻³ L par hectare de culture.

2. Utilisation du composé (I) selon la revendication 1, dans laquelle X représente un atome d'hydrogène, et n représente indifféremment 1, 2 ou 3.

3. Utilisation du composé (I) selon la revendication 1, dans laquelle X représente un atome de potassium et n un entier égal à 1, 2 ou 3.

4. Utilisation du composé (I) selon l'une quelconque des revendications 1 à 3, dans laquelle ledit composé (I) est utilisé sous la forme d'un complexe stabilisé avec un acide organique ou inorganique.

5. Utilisation du composé (I) selon la revendication 1, dans laquelle les agents phytopathogènes sont des pathogènes fongiques du genre *Fusarium* ou *Microdochium,* notamment rencontrés sur les céréales.

6. Utilisation du composé (I) selon la revendication 1, dans laquelle les mycotoxines sont choisies dans le groupe comprenant les trichothécènes, la zéaralénone, les fumonisines et leurs mélanges.

7. Utilisation du composé (I) selon l'une quelconque des revendications 1 à 6, en association avec :
- un pesticide choisi dans le groupe comprenant les fongicides, les herbicides, les insecticides et leurs mélanges, et/ou,
- un produit de traitement des cultures choisi dans le groupe comprenant les fertilisants, notamment les engrais, les biostimulants, les biocontrôles, les stimulateurs de défense naturelle (SDN) et leurs mélanges.

8. Utilisation du composé (I) selon la revendication 7, pour une administration simultanée, séparée ou séquentielle avec le pesticide et/ou le produit de traitement des cultures.

9. Composition phytosanitaire liquide pour une application foliaire sur les cultures **caractérisée en ce qu'**elle est constituée :
- d'un composé répondant à la formule (I) suivante :
Si(CH₃)(OH)₃₋ₙ(OX)ₙ (I)
dans laquelle X est un atome d'hydrogène ou un métal alcalin, notamment choisi parmi le lithium, le sodium ou le potassium et n est un entier allant de 1 à 3,
ledit composé (I) étant présent en une quantité allant de 0,00004% à 0,004% en poids par rapport au poids total de ladite composition,
- d'un pesticide choisi dans le groupe comprenant les fongicides, les herbicides, les insecticides et leurs mélanges, et/ou d'un produit de traitement des cultures choisi dans le groupe comprenant les fertilisants, notamment les engrais, les biostimulants, les biocontrôles, les stimulateurs de défense naturelle (SDN) et leurs mélanges,
- d'eau,
- et éventuellement d'un agent de formulation et/ou d'un agent adjuvant choisi dans le groupe comprenant les agents conservateurs, les agents émulsifiants, les agents tensioactifs, les agents dispersants, les agents antigels, les agents anti-mousse, les agents humectants, les agents pénétrants, les agents mouillants et étalants, les agents alourdisseurs de goutte, les agents anti-dérives, les agents collants et rétenteurs, et leurs mélanges.

10. Utilisation d'une composition selon la revendication 9, pour une application foliaire sur les cultures au moment de l'apparition des premières feuilles et/ou à tout autre moment jusqu' à la récolte des cultures.

## Patentansprüche

1. Verwendung einer Verbindung, die der folgenden Formel (I) entspricht:
Si(CH₃)(OH)₃₋ₙ(OX)ₙ (I)
wobei X ein Wasserstoffatom oder ein Alkalimetall ist, insbesondere gewählt aus Lithium, Natrium oder Kalium, und n eine ganze Zahl von 1 bis 3 ist,
für eine Blattanwendung auf Kulturen, wobei die Kulturen insbesondere aus der Gruppe gewählt sind, umfassend:
- Ackerkulturen, insbesondere solche, die aus Getreide, Ölsaaten, Eiweißpflanzen, Futterleguminosen, Futtergräsern oder Zuckerkulturen gewählt sind,
- Gemüse- oder Gartenbaukulturen, insbesondere Frischgemüse,
- Obstkulturen, insbesondere solche, die aus Steinobst, Kernobst, Mandelobst, Traubenobst, Beerenobst oder Obst aus wärmeren Regionen gewählt sind,
- Gewürz- und Arzneimittelpflanzen,
- Blumenkulturen und Zierpflanzen,
und deren Mischungen,
und für deren Eigenwirkung auf den Stoffwechsel der Kulturen, nämlich zur:
- Verbesserung des Wachstums und der Entwicklung der Kulturen,
- Steigerung des Ertrags der Kulturen,
- Stimulierung und Stärkung der Kulturen gegenüber biotischem Stress, insbesondere durch Verbesserung ihrer Resistenz gegenüber phytopathogenen Erregern und/oder Schädlingen, und/oder
- Verbesserung der gesundheitlichen Qualität der Kulturen, d.h. insbesondere durch Senken des Mykotoxingehalts und Begrenzung der Proteinverdünnung,
wobei die Verbindung (I) in flüssiger Form vorliegt und in einer Menge von 10⁻⁵ I bis 1 I pro Hektar Kulturfläche, vorzugsweise von 2×10⁻⁵ I bis 0,2 I pro Hektar Kulturfläche und besonders bevorzugt von 4×10⁻⁵ I bis 4×10⁻³ I pro Hektar Kulturfläche verwendet wird.

2. Verwendung der Verbindung (I) nach Anspruch 1, wobei X ein Wasserstoffatom darstellt und n gleichermaßen 1, 2 oder 3 darstellt.

3. Verwendung der Verbindung (I) nach Anspruch 1, wobei X ein Kaliumatom darstellt und n eine ganze Zahl gleich 1, 2 oder 3 ist.

4. Verwendung der Verbindung (I) nach einem der Ansprüche 1 bis 3, wobei die Verbindung (I) in Form eines mit einer organischen oder anorganischen Säure stabilisierten Komplexes verwendet wird.

5. Verwendung der Verbindung (I) nach Anspruch 1, wobei es sich bei den phytopathogenen Erregern um Pilzpathogene der Gattung *Fusarium* oder *Microdochium* handelt, die insbesondere bei Getreide vorkommen.

6. Verwendung der Verbindung (I) nach Anspruch 1, wobei die Mykotoxine aus der Gruppe gewählt sind, umfassend Trichothecene, Zearalenon, Fumonisine und deren Mischungen.

7. Verwendung der Verbindung (I) nach einem der Ansprüche 1 bis 6 in Verbindung mit:
- einem Pestizid, gewählt aus der Gruppe, umfassend Fungizide, Herbizide, Insektizide und deren Mischungen, und/oder,
- einem Pflanzenbehandlungsmittel, gewählt aus der Gruppe, umfassend Düngemittel, insbesondere Dünger, Biostimulanzien, Biokontrollmittel, Stimulanzien der natürlichen Abwehr (NDS) und deren Mischungen.

8. Verwendung der Verbindung (I) nach Anspruch 7 zur gleichzeitigen, getrennten oder aufeinanderfolgenden Verabreichung mit dem Pestizid und/oder dem Pflanzenbehandlungsmittel.

9. Flüssige Pflanzenschutzmittelzusammensetzung zur Blattanwendung auf Kulturen, **dadurch gekennzeichnet, dass** sie besteht aus:
- einer Verbindung mit der folgenden Formel (I):
Si(CH₃)(OH)₃₋ₙ(OX)ₙ (I)
wobei X ein Wasserstoffatom oder ein Alkalimetall ist, insbesondere gewählt aus Lithium, Natrium oder Kalium, und n eine ganze Zahl von 1 bis 3 ist,
wobei die Verbindung (I) in einer Menge von 0,00004 bis zu 0,004 Gew.-%, bezogen auf das Gesamtgewicht der Zusammensetzung, vorliegt,
- einem Pestizid, gewählt aus der Gruppe, umfassend Fungizide, Herbizide, Insektizide und deren Mischungen, und/oder einem Pflanzenbehandlungsmittel, gewählt aus der Gruppe, umfassend Düngemittel, insbesondere Dünger, Biostimulanzien, Biokontrollmittel, Stimulanzien der natürlichen Abwehr (NDS) und deren Mischungen,
- Wasser,
- und gegebenenfalls einem Formulierungsmittel und/oder Hilfsstoff, gewählt aus der Gruppe, umfassend Konservierungsmittel, Emulgatoren, Tenside, Dispergiermittel, Frostschutzmittel, Antischaummittel, Feuchthaltemittel, Penetrationsmittel, Benetzungs- und Verbreitungsmittel, Tropfenbeschwerer, Antidriftmittel, Klebemittel und Retentionsmittel und deren Mischungen.

10. Verwendung einer Zusammensetzung nach Anspruch 9 zur Blattanwendung auf Kulturen zum Zeitpunkt des Erscheinens der ersten Blätter und/oder zu jedem anderen Zeitpunkt bis zur Ernte der Kulturen.

## Claims

1. A use of a compound corresponding to the following formula (I):
Si(CH₃)(OH)₃₋ₙ(OX)ₙ (I)
wherein X is a hydrogen atom or an alkali metal, in particular selected from lithium, sodium or potassium and n is an integer ranging from 1 to 3,
for a foliar application to crops, said crops being in particular selected from the group comprising:
- field crops, in particular those selected from cereals, oilseeds, protein crops, fodder legumes, fodder grasses or sugar crops,
- vegetable or market garden crops, in particular fresh vegetables,
- fruit crops, in particular those selected from stone fruits, pome fruits, almond fruits, cluster fruits, small fruits or fruits of warm regions,
- aromatic and medicinal plants
- floral and ornamental crops,
and mixtures thereof,
and for its specific action on the metabolism of crops, namely to:
- improve the growth and development of the crops,
- improve the yield of the crops,
- stimulate and strengthen the crops in the face of biotic stress, in particular by improving their resistance to phytopathogenic agents and/or pests, and/or
- improve the health quality of the crops, namely in particular reduce the level of mycotoxins and limit the protein dilution,
said compound (I) being in liquid form and being used in an amount ranging from 10⁻⁵ L to 1 L per hectare of crop, preferably from 2×10⁻⁵ L to 0.2 L per hectare of crop, and more preferably from 4×10⁻⁵ L to 4×10⁻³ L per hectare of crop.

2. The use of the compound (I) according to claim 1, wherein X represents a hydrogen atom, and n represents indifferently 1, 2 or 3.

3. The use of the compound (I) according to claim 1, wherein X represents a potassium atom and n an integer equal to 1, 2 or 3.

4. The use of the compound (I) according to any one of claims 1 to 3, wherein said compound (I) is used in the form of a complex stabilised with an organic or inorganic acid.

5. The use of the compound (I) according to claim 1, wherein the phytopathogens are fungal pathogens of the *Fusarium* or *Microdochium* genus in particular encountered on cereals.

6. The use of the compound (I) according to claim 1, wherein the mycotoxins are selected from the group comprising trichothecenes, zearalenone, fumonisins and mixtures thereof.

7. The use of the compound (I) according to any one of claims 1 to 6, in combination with:
- a pesticide selected from the group comprising fungicides, herbicides, insecticides and mixtures thereof, and/or
- a crop treatment product selected from the group comprising fertilisers, in particular nutrients, biostimulants, biocontrols, natural defence stimulators (NDS) and mixtures thereof.

8. The use of the compound (I) according to claim 7, for a simultaneous, separate or sequential administration with the pesticide and/or the crop treatment product.

9. A liquid phytosanitary composition for a foliar application to crops, **characterised in that** it consists of:
- a compound corresponding to the following formula (I)
Si(CH₃)(OH)₃₋ₙ(OX)ₙ (I)
wherein X is a hydrogen atom or an alkali metal, in particular selected from lithium, sodium or potassium and n is an integer ranging from 1 to 3,
said compound (I) being present in an amount ranging from 0.00004% to 0.004% by weight relative to the total weight of said composition,
- a pesticide selected from the group comprising fungicides, herbicides, insecticides and mixtures thereof, and/or a crop treatment product selected from the group comprising fertilisers, in particular nutrients, biostimulants, biocontrols, natural defence stimulators (NDS) and mixtures thereof,
- water,
- and optionally a formulation agent and/or an adjuvant agent selected from the group comprising preservative agents, emulsifying agents, surfactants, dispersants, antifreeze agents, anti-foam agents, humectants, penetrating agents, wetting and spreading agents, drop-weighting agents, anti-drift agents, sticky and retaining agents, and mixtures thereof.

10. The use of a composition according to claim 9, for a foliar application to crops at the time of the appearance of the first leaves and/or at any other time until the crops are harvested.
